# EUROPEAN PATENT SPECIFICATION

(11) **EP 3 133 375 B1**
(45) Date of publication and mention of the grant of the patent: **15.09.2021**
(21) Application number: 15779244.1
(22) Date of filing: 17.04.2015
(51) Int. Cl.: G01D 5/24, H02N 1/08

(54) **SENSOR AND POWER GENERATOR BASED ON ELECTROSTATIC INDUCTION, AND SENSING METHOD AND POWER GENERATION METHOD**
SENSOR UND STROMGENERATOR AUF DER BASIS VON ELEKTROSTATISCHER INDUKTION UND MESSVERFAHREN SOWIE STROMERZEUGUNGSVERFAHREN
CAPTEUR ET GÉNÉRATEUR D'ÉNERGIE À BASE D'INDUCTION ÉLECTROSTATIQUE, PROCÉDÉ DE DÉTECTION ET PROCÉDÉ DE GÉNÉRATION D'ÉNERGIE

(30) Priority: 18.04.2014 CN 201410158431; 18.04.2014 CN 201410157925
(43) Date of publication of application: 22.02.2017
(73) Proprietor: Beijing Institute of Nanoenergy and Nanosystems, Beijing 100083 (CN)
(72) Inventor: WANG, Zhonglin, Beijing 100083 (CN); ZHU, Guang, Beijing 100083 (CN)
(74) Representative: Patentanwälte Geyer, Fehners & Partner mbB
(86) International application number: PCT/CN2015/076872
(87) International publication number: WO 2015/158302

(56) References cited:
- EP-A1- 1 801 600
- WO-A1-2011/052106
- CN-A- 101 785 175
- CN-A- 103 368 447
- CN-A- 103 368 452
- CN-A- 104 734 556
- CN-U- 202 818 150
- CN-U- 202 856 656
- CN-U- 203 532 171
- JP-A- 2004 132 886
- US-A1- 2005 195 097
- US-A1- 2010 019 616
- US-A1- 2013 049 531
- US-B2- 8 461 743
- Ya Yang ET AL: "Single-Electrode-Based Sliding Triboelectric Nanogenerator for Self-Powered Displacement Vector Sensor System", ACS Nano, vol. 7, no. 8, 27 August 2013 (2013-08-27) , pages 7342-7351, XP055184239, ISSN: 1936-0851, DOI: 10.1021/nn403021m
- KOICHI KURITA: "Detection of human respiration based on measurement of current generated by electrostatic induction", ARTIFICIAL LIFE AND ROBOTICS, SPRINGER-VERLAG, TO, vol. 15, no. 2, 10 September 2010 (2010-09-10), pages 181-184, XP019805947, ISSN: 1614-7456

## Description

### BACKGROUND OF THE INVENTION

### FIELD OF THE INVENTION

The present disclosure relates to a sensing or generating method based on electrostatic induction caused by movement of a charged object.

### DESCRIPTION OF THE RELATED ART

With a rapid development of microelectronics and material technologies, a large number of new microelectronic devices with multiple functions and high integration continue to be developed and present an unprecedented application prospect in various fields.

Although there are several methods to sense movement of charged or uncharged objects, such as a sensing method using a laser sensor, it is necessary in all of existing sensing methods to provide a matching power supply for micro sensor to drive the sensor to work. In general, the power for these micro sensors is obtained directly or indirectly from a battery. The battery is not only large and heavy, but also contains toxic chemical substances that have potential hazards to the environment and human beings. Due to these limitations to the power supply of sensor, the scope of application of the corresponding sensing method is narrow, the sensor is not suitable to be used in harsh environmental situations, and it is difficult for a sensor to work independently for a long time. For working needs that occur randomly, it is necessary for a sensor to be powered for a long time, which does not meet the requirements for energy saving.

Furthermore, researches on a power supply system that matches these microelectronic devices are slowly carried out. In general, the power supply of these microelectronic devices is directly or indirectly from the battery. However, the battery is not only large and heavy, but also contains toxic chemical substances that have potential hazards to the environment and human beings. If the mechanical energy that is ubiquitous in the nature, such as movement and vibration, can be used, it is possible to provide power for microelectronic devices with such mechanical energy.

An existing friction nanogenerator may effectively convert the mechanical energy that is ubiquitous in the nature, such as the movement and vibration, to meet the requirements of application of microelectronic devices. All friction nanogenerators currently found in the reports have a typical structure in which two friction layers that can be brought into contact with and then separation from each other are necessary. In the process that the two friction layers are brought into contact with or separation from each other, a pulsed electric signal is output to an external circuit by two electrode layers respectively disposed on the friction layers. In the friction generator with such a structure, the distance from one electrode layer to the other electrode layer is continuously changed under driving of the friction layer. Such a structure makes it difficult for the friction generator to be connected to an external circuit. Further, in order to ensure that the output performance of the friction generator, the two friction layer materials are required to frequently contact or frictionate with each other. Therefore, the durability and stability of the generator cannot be guaranteed. These limitations greatly hinder the promotion and application of the friction generator.

EP 1 801 600 A1 discloses an electrostatic induction based sensor.

CN 203 532 171 U discloses an electrostatic induction based generator.

### SUMMARY OF THE INVENTION

The invention is defined in claim 1.

Further developments are given in the dependent claims.

The insulating material can include one or more of the following materials: polytetrafluoroethylene, polydimethylsiloxane, polyimide, polydiphenyl propane carbonate, polyethylene glycol terephthalate, aniline-formaldehyde resin, polyformaldehyde, ethyl cellulose, polyamide, melamine-formaldehyde, polyethylene glycol succinate, cellulose, cellulose acetate, polyethylene glycol adipate, polydiallyl phthalate, regenerated cellulose sponge, polyurethane elastomer, styrene-propylene copolymer, styrene-butadiene copolymer, rayon, polymethacrylate, polyvinyl alcohol, polyester, polyisobutylene, polyurethane flexible sponge, polyvinyl butyral, phenolic resin, chloroprene rubber, butadiene-propylene copolymer, natural rubber, polyacrylonitrile, poly(vinylidene chloride-co-acrylonitrile), polyethylene bisphenol A carbonate, polystyrene, polymethyl methacrylate, polycarbonate, liquid crystal macromolecule polymer, polychloroprene, polyacrylonitrile, polybisphenol carbonate, polychloroether, polytrifluorochloroethylene, polyvinylidene chloride, polyethylene, polypropylene, polyvinyl chloride, Parylene, wool and fabrics thereof, silk and fabrics thereof, paper, cotton and fabrics thereof, polyurethane elastomer, wood, hard rubber, and acetate.

In an embodiment of the present disclosure, the first electrode layer and the second electrode layer are made of metal or indium tin oxide (ITO), FTO, or a conductive macromolecule material.

In an embodiment of the present disclosure, the first electrode layer and/or the second electrode layer are of flexible material.

In an embodiment of the present disclosure, the isolating layer is of flexible material.

In an embodiment of the present disclosure, at least one of two surfaces by which the object and the first electrode layer are allowed to be brought into contact with each other is treated by physical or chemical modification.

In an embodiment of the present disclosure, projection of the object on a plane in which the first electrode layer is located and the first electrode layer are substantially same in size and shape.

In an embodiment of the present disclosure, the object is of electret material.

In an embodiment of the present disclosure, a portion or whole of the surface physically modified is distributed with microstructure array of micron or sub-micron order.

In an embodiment of the present disclosure, a portion or whole of the surface chemically modified is distributed with microstructure of nanometer, micron or sub-micron order which is selected from nanowires, nanotubes, nanoparticles, nanorods, nanoflowers, nanogrooves, micron grooves, nanotapers, micron tapers, nanospheres, micron spherical structure or an array formed of the above structures.

In an embodiment of the present disclosure, the first electrode layer and the second electrode layer are made of metal or indium tin oxide (ITO), FTO, or a conductive macromolecule material.

In an embodiment of the present disclosure, the step of moving the object relative to the first electrode layer includes: bringing the object into contact with and then separation from a surface of the first electrode layer such that the object is charged. Alternatively, the step of moving the object relative to the first electrode layer includes: bringing a surface of the object into sliding friction with a surface of the first electrode layer to change contact area therebetween in the sliding friction process, such that the surface of the object is charged. Alternatively, the step of moving the object relative to the first electrode layer includes: moving the object relative to the first electrode layer without contacting the first electrode layer at any time in a case that the object carries charges itself.

### BRIEF DESCRIPTION OF THE DRAWINGS

The above and other objects, features and advantages of the present disclosure will become clearer from the drawings. In the drawings, the same reference numerals indicate the same parts. It is not intended for the drawings to be drawn in a same scale according to the actual size and the focus is that the gist of the present disclosure can be shown. Further, although the present application provides exemplary parameters that contain specific values, it is not intended for the parameters to be exactly equal to the corresponding values, but the parameters can be substantially equal to the corresponding values within the acceptable tolerance or design constraints. In addition, directional terms mentioned in all embodiments, such as "upper", "lower", "front", "rear", "left", "right", only refer to the directions in the drawings. Thus, the directional terms are used to illustrate but are not intended to limit the present disclosure.
Fig. 1 is a schematic view of a typical structure of first embodiment of an electrostatic induction based sensor or generator;
Fig. 2 is a schematic view of sensing contact-separation between the object to be detected and the sensor according to the first embodiment, and is also a schematic view of principle of the first embodiment of the sensor or generator according to the present disclosure;
Fig. 3 is a schematic view of sensing sliding friction between the object to be detected and the sensor according to the first embodiment, and is also a schematic view of structure and principle of generating electricity in a second embodiment of the generator according to the present disclosure;
Fig. 4 is a schematic view of the first embodiment of the sensor according to the present disclosure in which a surface of the first electrode layer and a surface of the object to be detected that are brought into contact with each other are uneven concavo-convex structures, and is also a schematic view of the second embodiment of the sensor according to the present disclosure in which a surface of the first component and a surface of the first electrode layer that are brought into contact with each other are uneven concavo-convex structures;
Fig. 5 is a schematic view of sensing in which the object to be detected is not brought into contact with the sensor according to the first embodiment and in which the distance from charge center of the object to be detected to the sensor changes, and is also a schematic view of structure of third embodiment of the generator according to the present disclosure;
Fig. 6 is a schematic view of principle of generating electricity of third embodiment of the generator according to the present disclosure;
Fig. 7 is a schematic view of structure and principle of generating electricity of fourth embodiment of the sensor or generator according to the present disclosure;
Figs. 8-10 are schematic views of the sensor or generator according to the present disclosure including an isolating layer (the sensor or generator shown in Fig. 10 is not part of the claimed invention); and
Fig. 11 is a test diagram of output voltage of a specific sensor or generator.

### DETAILED DESCRIPTION OF EMBODIMENTS OF THE IVENTION

Solutions in embodiments of the present disclosure will now be clearly and completely described in connection with the accompanying drawings in embodiments of the present disclosure. Obviously, the described embodiments are merely a part of the embodiments of the present disclosure, rather than all embodiments.

Secondly, the present disclosure is described in detail in conjunction with schematic views. When the present disclosure is described in detail, the schematic views are merely used as examples to illustrate the present disclosure and are not intended to limit the protection scope of the present disclosure.

Existing sensors for detecting movement of objects require a power supply such as a battery to be provided and the power supply for the sensors should be turned on all the time. This results in a lot of limitations to application of the sensors. The sensors may not be applicable in a harsh environment. It is also difficult for the sensors to work independently for a long time. With a typical structure of a conventional friction nanogenerator, a pulsed electrical signal is output to an external circuit from two electrode layers disposed on respective friction layers during the two friction layers are brought into contact with and separation from each other. In a process of generating electricity, a distance from one electrode layer to the other electrode layer continuously changes. This not only does not facilitate connection between the electrodes of the generator, but also requires continuous contact or friction between the two friction layers in order to ensure output performance of friction generator. Thus, the durability and stability of the generator may not be ensured.

One aspect of the disclosure provides an electrostatic induction based sensor with a simple structure which can independently sense movement of objects by utilizing the principle of electrostatic induction without providing a power supply.

One aspect of the present disclosure provides an electrostatic induction based sensor. The technical solution thereof is described as follows:
A position of an object to be detected that carries charges relative to a conductive member of a sensing component that is electrically connected to another conductive member of the sensing component changes, so that electric potential on the conductive member generated by the charges carried by the object to be detected changes. Charges flow between the two conductive members due to the electrostatic induction effect, so that current flows through a load or a detecting device connected between the two conductive members. In operating process of the sensor, the object to be detected may directly contact with the conductive member of the sensing component in a manner of sliding friction or periodical contact-separation relative to each other. The object to be detected may also not contact with the conductive member of the sensing component and only distance therebetween is changed. In the latter mode, the object to be detected is required to carry charges by itself, and in process of changing the distance, electric potential on the conductive member generated by the charges carried by the object to be detected changes. The sensor according to the present disclosure may be operated in a variety of operating modes, may be adaptive for energy collection for different movement modes of the object to be detected, and may be widely employed.

Another aspect of the disclosure provides an electrostatic induction based generator. The technical solution thereof is described as follows:
A position of a first component that carries charges relative to a conductive member that is electrically connected to another conductive member changes, so that electric potential on the conductive member generated by the charges carried by the first component changes. Charges flow between the two conductive members due to the electrostatic induction effect, so that current flows through a load connected between the two conductive members. In operating process of generator, the first component may directly contact with the conductive member in a manner of sliding friction or periodical contact-separation relative to each other. The first component may also not contact with the conductive member and only distance therebetween is changed. In the latter mode, the first component is required to carry charges by itself. The generator according to the present disclosure may be operated in a variety of operating modes, may be adaptive for energy collection for different movement mode of the first component, and may be widely employed.

The present disclosure has the following advantageous effects:
(1) In the sensor according to the present disclosure, but not according to the invention, the surface of the object to be detected is in contact friction or in sliding friction with the surface of the first electrode layer of the sensing component or with the surface of the friction layer attached to the first electrode layer each other, such that the surface of the object to be detected carries charges. Then, in two relative movement modes in which the object to be detected is brought into contact with and separation from or into sliding friction with the first electrode layer or the friction layer, electric potential on the first electrode layer generated by charges carried by the object to be detectedchanges and the charges flow between the two electrode layers of the sensing component to generate a current.
   Alternatively, according to the invention, the object to be detected carries charges itself. This results in that, by changing position of the object to be detected relative to the first electrode layer without contacting any part of the sensing component, the charges flow between the two electrode layers of the sensing component under the electrostatic induction effect to generate a current. Therefore, when the object to be detected moves relative to the first electrode layer or the friction layer, it is not necessary for the two electrode layers of the sensing component to follow a movement to be detected. The distance or relative position between the two electrode layers can be easily provided depending on a connecting convenience of external circuits or operating environments.
   The sensor according to the present closure can be widely employed and overcomes the disadvantages of the prior art sensors to which an external power supply is necessary to be supplied. The sensor according to the present disclosure may maintain a long and stable running, in particular for a case in which it is inconvenient for the battery to be replaced.
2. The object to be detected may be a semiconductor, an insulator, and even conductors, as long as there is a difference in electron donating and accepting capability of the material surface between a surface of the object to be detected and a surface of the sensing component, such as the first electrode layer or the friction layer, that are brought into contact with each other. When the object to be detected and the sensing component are separated after contacting with each other or are in a relative sliding friction, the sensor can sense movement of the object to be detected. For the object to be detected carrying charges itself, as long as electric potential of charges carried by the object to be detected to the first electrode layer changes, the sensor can sense movement of the object to be detected. Accordingly, the sensor according to the present disclosure can be widely employed and can be adapted to objects to be detected of different materials.
3. By disposing a friction layer on the first electrode layer of the sensor, the first electrode layer and the object to be detected will not directly contact with each other and will not slide relative to each other in the sensing process, preventing wear of the electrode layer of the sensing component and greatly improving the use durability of the sensor.
4. The sensor includes an isolating layer.
5. In the generator according to the present disclosure, but not according to the invention, the surface of the first component is in contact friction or in sliding friction with the surface of the electrode layer of the second component or with the surface of the friction layer attached to the first electrode layer, such that the surface of the first component carries charges. Then, in two relative movement modes in which the first component is in contact-separation from or in sliding friction with the first electrode layer or the friction layer, electric potential of charges carried by first component to the first electrode layer changes and the charges flow between the two electrode layers of the second component to generate a current.
   Alternatively and according to the invention, the first component carries charges itself. This results in that, by changing position of the first component relative to the first electrode layer without contacting any electrode layer of the second component, the charges flow between the two electrode layers of the second component under the electrostatic induction effect to generate a current. Therefore, when the first component moves relative to the first electrode layer it is not necessary for the two electrode layers of the second component to follow movement of the first component. The distance or relative position between the two electrode layers can be easily provided depending on situations, such as a connecting convenience of external circuits or operating environments.
   The generator according to the present closure can be widely employed and can easily convert mechanical energy to electrical energy in everyday life.
6. By disposing a friction layer on the first electrode layer of the second component, in an example outside the scope of the invention, the first component and the first electrode layer will not directly contact with each other and will not slide relative to each other in the process of generating electricity, preventing wear of the electrode layer of the second component and greatly improving the use durability of the generator.
7. Since there is no need to provide an electrode layer on the first component, not only there is no special requirement for the structure of the first component, but also the process of preparation of the generator is simplified, which can effectively reduce the production cost of the generator.
8. The generator includes an isolating layer.

Specific structures of the electrostatic induction based sensor and generator according to the present disclosure will be described below in detail in connection with the accompanying drawings. The principles of the invention are exemplified in Example Five. Examples One through Four and Six through Eight are not according to the invention.

### Example One:

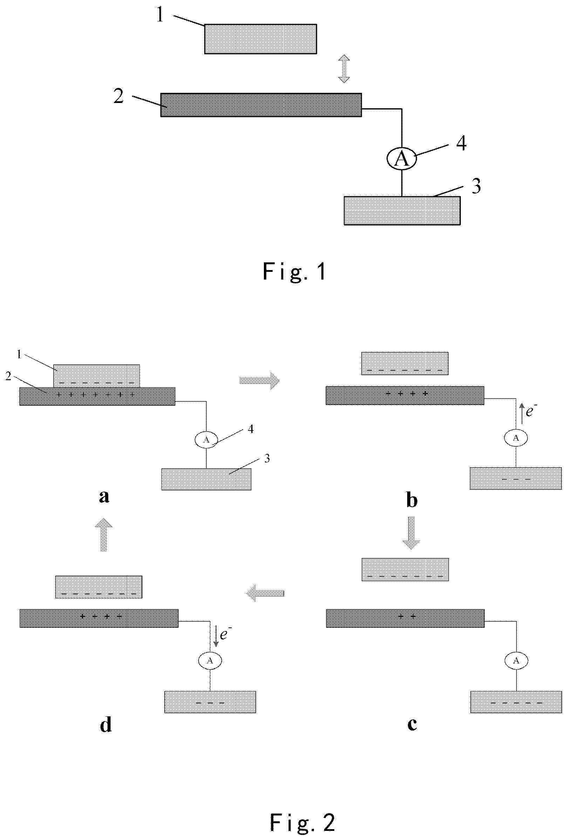

A typical structure of electrostatic induction based sensor according to the present embodiment is shown in Fig. 1. The sensor includes a sensing component for detecting movement of an object to be detected 1. The sensing component comprises a first electrode layer 2 and a second electrode layer 3 associated therewith. The first electrode layer 2 and the second electrode layer 3 are separately disposed and electrically connected. The object to be detected 1 may be brought into contact with and then separation from the first electrode layer 2, as indicated by the arrow shown in Fig. 1. The movement of the object to be detected 1 causes electric potential on the first electrode layer 2 generated by charges carried by the object to be detected 1 to change. Charges flow between the first electrode layer and the second electrode layer under the electrostatic induction effect to generate a current. Between the first electrode layer 2 and the second electrode layer 3, a detection device 4 may be connected to detect a current in the sensing component, or a load may be connected such that power is supplied to the load by using the electrical energy generated by the sensor.

A generator may be produced based on the above principle. The object to be detected mentioned in describing the above sensor is considered as a component that is included in the generator on its own. That is, the generator includes a first component 1 and a second component comprising a first electrode layer 2 and a second electrode layer 3 associated therewith. The first electrode layer 2 and the second electrode layer 3 are separately disposed and electrically connected to each other. The first component 1 may be brought into contact with and then separation from the first electrode layer 2, as indicated by the arrow shown in Fig. 1. The movement of the first component 1 causes electric potential on the first electrode layer 2 generated by charges carried by the first component 1 to change. Charges flow between the first electrode layer and the second electrode layer under the electrostatic induction effect to generate a current. Between the first electrode layer 2 and the second electrode layer 3, a detection device 4 may be connected to detect a current in the generator, or a load may be connected such that power is supplied to the load by using the electrical energy generated by the generator.

For a case that the first component 1 is an uncharged object, an embodiment in which the first component 1 is of insulator or semiconductor material and the first electrode layer 2 is of conductive material is taken as an example to specifically illustrate the operating principle of the generator. It should be noted that, since sensor and the generator according to the present disclosure have a similar structure, the operating principle of the generator is also suitable for the sensor.

Referring to Fig. 2, when the first component 1 is brought into surface contact with the first electrode layer 2 of the second component, due to a difference in electron donating and accepting capability between surface of the first component 1 and surface of the first electrode layer 2, specifically, the surface of the first electrode layer 2 is susceptible to donate electrons and the surface of the first component 1 is susceptible to accept electrons. Charges with same quantity but opposite signs are generated on the surface of the first component 1 and the surface of the first electrode layer 2, as shown in Fig. 2a. After the first component 1 is separated from the first electrode layer 2, as shown in Fig. 2a, a constraint of negative charges carried on the surface of the first component 1 to positive charges carried on the surface of the first electrode layer 2 is weakened. Due to the electrostatic induction effect, positive charges carried on the first electrode layer 2 flow toward the second electrode layer 3 to generate a current from the first electrode layer 2 to the second electrode layer 3. When a distance from the first component 1 to the first electrode layer 2 is large enough, negative charges carried on the surface of the first component 1 is insufficient to affect charges carried on the first electrode layer 2. Then, there is no current to be generated between the first electrode layer 2 and the second electrode layer 3, as shown in Fig. 2c. When the first component 1 which carries negative charges on its surface is approaching to the first electrode layer 2, attraction of the negative charges carried on the surface of the first component 1 to the positive charges carried on the first electrode layer 2 is enhanced. Positive charges carried on the second electrode layer 3 flow toward the first electrode layer 2 under the electrostatic induction effect, as shown in Fig. 2d, to generate a current from the second electrode layer 3 to the first electrode layer 2. Flowing direction of the electrons is opposite to the flowing direction of the electrons shown in Fig. 2b . Until the first component 1 is brought into contact with the surface of the first electrode layer 2 again, the charges on the surface of the first component 1 and the charges on the surface of the first electrode layer 2 have the same quantity and opposite signs. As seen in Fig. 2a, there is no charges that flow in the first electrode layer 2 and the second electrode layer 3. When the first component 1 may be brought into contact with and then separation from the first electrode layer 2 of the second component periodically, a pulsed alternating current signal will be generated in the second component between the first electrode layer 2 and the second electrode layer 3.

The above process shows that, when the above-described structure is used as a sensor and after the first component 1 that is used as the object to be detected is brought into contact with and then separation from the first electrode layer 2 in the sensing component, there is no need to provide an external power supply. The movement of the first component 1 that does not carry charges and that is used as the object to be detected may be detected by the sensing component of the sensor. If the first component 1 that is used as the object to be detected is brought into contact with and then separation from the sensing component of the sensor several times, several pulsed alternating current signals will be generated in the sensing component.

In this embodiment, the first component 1 may also be charged in advance prior to contacting the first electrode layer. When the first component carrying charges is brought into contact with the first electrode layer, the charges carried on the first component 1 will be redistributed between the first component and the first electrode layer. Due to different capabilities of different material to constrain charges, there is still difference in concentration of charge between two contact surfaces. When the first component 1 and the first electrode layer 2 are separated from each other, the first component 1 still carries charges. When the distance between the first component 1 and the first electrode layer 2 changes, charges flow between the first component 1 and the first electrode layer 2 due to the electrostatic induction effect and a current is output to the detecting device. Charges carried on the first component 1 may be obtained by charging it or by means of other manners. The method of obtaining the charges has no effect on the detecting process of the sensor and the process of generating electricity of the generator according to the present disclosure and will be not construed as a limitation to the sensor or generator according to the present disclosure.

In the present embodiment, among the two electrode layers of the second component, only one electrode layer is required to interact with the first component 1 under electrostatic effect and the positions of the two electrode layers may be interchanged. Material of the first electrode layer 2 and material of the second electrode layer 3 may be same or different. The material of the first electrode layer 2 or the second electrode layer 3 may be selected from metal, indium tin oxide or organic conductor. The commonly used metal includes gold, silver, platinum, aluminum, nickel, copper, titanium, chromium, selenium, or alloy formed by the above metallic materials. The organic conductor generally includes conductive macromolecule, including self-polypyrrole, polyphenylene sulfide, polyphthalocyanine compounds, polyaniline and/or polythiophene.

It can be known from the principle of generating electricity of the sensor or generator that, the quantity of the charges carried on the surface of the first component 1 is critical to the operation of the sensor or generator. The larger the difference of electron donating and accepting capability between the surface of the first component 1 and the surface of the first electrode layer 2 that contact with each other is, the more charges the surface of the first component 1 can carry. In an embodiment of the present disclosure, material of the surface of the first component 1 that contacts with the first electrode layer 2 includes insulator material. The insulator material preferably includes polymer insulating material, which may particularly be chosen from: polytetrafluoroethylene, polydimethylsiloxane, polyimide, polydiphenyl propane carbonate, polyethylene glycol terephthalate, aniline-formaldehyde resin, polyformaldehyde, ethyl cellulose, polyamide, melamine-formaldehyde, polyethylene glycol succinate, cellulose, cellulose acetate, polyethylene glycol adipate, polydiallyl phthalate, regenerated cellulose sponge, polyurethane elastomer, styrene-propylene copolymer, styrene-butadiene copolymer, rayon, polymethacrylate, polyvinyl alcohol, polyester, polyisobutylene, polyurethane flexible sponge, polyvinyl butyral, phenolic resin, chloroprene rubber, butadiene-propylene copolymer, natural rubber, polyacrylonitrile, poly(vinylidene chloride-co-acrylonitrile), polyethylene bisphenol A carbonate, polystyrene, polymethyl methacrylate, polycarbonate, liquid crystal macromolecule polymer, polychloroprene, polyacrylonitrile, polybisphenol carbonate, polychloroether, polytrifluorochloroethylene, polyvinylidene chloride, polyethylene, polypropylene, polyvinyl chloride, Parylene, and so on.

In addition, other insulating materials may also be used as material of the surface of the first component 1 that contacts with the first electrode layer 2, such as wool and fabrics thereof, silk and fabrics thereof, paper, cotton and fabrics thereof, polyurethane elastomer, wood, hard rubber, and acetate that is commonly used.

The first electrode layer is of conductive material. Since there is a difference in electron donating and accepting capability between the semiconductor material and the conductive material, material of surface of the first component that may contact the first electrode layer may be selected from semiconductors, including silicon, germanium; a Group III and Group V compound, such as gallium arsenide, gallium phosphide; a Group II and Group VI compound, such as cadmium sulfide, zinc sulfide; and a solid solution consisting of a Group III-Group V compound and a Group II-Group VI compound, such as gallium aluminum arsenide, gallium arsenic phosphide,. In addition to the above-mentioned crystalline semiconductors, amorphous glass semiconductors, organic semiconductors, and the like are also possible. Non-conductive oxides, semiconductor oxides, and complex oxides, such as oxides of manganese, chromium, iron and copper, also including silicon oxide, manganese oxide, chromium oxide, iron oxides, copper oxide, zinc oxide, BiO₂ and Y₂O₃, also exhibit triboelectric characteristics and may generate surface charges in a friction process, thus they may also be used as the material of the first component in the present disclosure.

Due to space limitations, it is impossible to enumerate herein all applicable materials for the surface of the first component 1 and the surface of the first electrode layer 2 that contact with each other. Only some specific materials are listed herein, for providing reference for the readers. However, it is obvious that these specific materials may not be a factor limiting the protection scope of the present disclosure, because those skilled in the art can easily select other similar materials according to the triboelectric properties possessed by these materials, under the teaching from the present disclosure.

In the sensor or generator, only the surface of the first component 1 and the surface of the first electrode layer 2 that can contact with each other have an influence on the output performance of the sensor or generator. It is only necessary to define the surface of the first component 1 that can contact with the first electrode layer 2 to be of the materials described above and the other portions of the first component 1 are not limited. Therefore, the first component 1 may entirely be made of homogeneous material, and may be a multilayer structure or a core-shell structure.

Through experiments, it is found that, the larger the difference in electron donating and accepting capability between the surface of the first component 1 and the surface of the first electrode layer 2 that contact with each other is, the more charges the surface of the first component 1 can carry, and thus the stronger the electrical signal output from the sensor or generator is. Therefore, appropriate materials may be selected as surface material of the first component 1 and surface material of the first electrode layer 2 that contact with each other to obtain a best electrical signal output performance by simple comparative experiments based on the material listed above.

Further, the two surfaces by which the first component 1 and the first electrode layer 2 contact with each other may be of hard material or flexible material. The hardness of the material has no significant effect on the performance of generating electricity of the sensor or generator, and may extend the application scope of the sensor or generator according to the present disclosure.

In the operating process of the sensor or generator, the quantity of the charges carried on the surface of the first component 1 has an effect on the output performance of the sensor or generator. In addition to that, the distance by which the first component 1 is spaced from the first electrode layer 2 of the second component also has an effect on the output performance of the sensor or generator. The greater the spaced distance is, the stronger the output signal from the sensor or generator is. It is found during a study that, when the spaced distance is greater than the size of the device, and particularly greater than the maximum length of the surfaces of the first component 1 and the first electrode layer 2 that contact with each other, change of the spaced distance has little effect on the output signal of the sensor or generator. In an embodiment of the present disclosure, the distance by which the first component 1 is spaced from the first electrode layer 2 is greater than 1µm, more preferably from 1µm to 10cm, and preferably from 1mm to 2cm.

"The maximum length of the surface" herein particularly refers to the maximum length of the surface in various directions, such as the length of the long side of a rectangle, the length of diameter of a circular surface. For the irregular surface, the maximum length of the surface may be determined by a specific measurement.

With the sensor or the generator in this embodiment, the movement of the first component 1 relative to the second component may be implemented in various ways. For example, the second component, and particularlly the first electrode layer 2 of the second component is fixed. The first component 1 is fixed to a reciprocating component which drives the first component of the sensor or generator to reciprocate, achieving the contact-separation of the first component 1 relative to the second component. In other embodiments, an elastic connector may also be provided between the first component 1 and the second electrode layer 2 to realize the purpose of reciprocating the first component 1 so as to approach or move away from the first electrode layer 2. The above purpose may be achieved by various technical means and conventional components for controlling distance in the art may be employed. For example, other components such as an insulating spring may be connected between the first component 1 and the first electrode layer 2. However, it should be noted that the spring employed should not constrain the relative movement of the first component 1 and the first electrode layer 1. In addition, for the sensor according to the present disclosure, the first component used as the object to be detected may be objects that are free to move, such as soles used when people walks. For the generator according to the present disclosure, the first component 1 may be an object that is free to move and can be periodically brought into contact with and then separation from the first electrode layer. Alternatively, the first component 1 is fixed to other moving object and is used in conjunction with other products so as to drive the first component 1 to move relative to the first electrode layer 2 by means of the motion of other products, thereby achieving electricity generation of the generator.

In the present embodiment, the first component 1 is an object that independently moves relative to the second component and there is no electrode layer connected thereto. Accordingly, the thickness, size and shape of the first component are not particularly limited. In order to increase the quantity of surface charges respectively carried on the first component 1 and the first electrode layer 2 when they contact, the first component 1 as a whole may be a block, plate, sheet or film. In an embodiment of the present disclosure, the surface of the first component 1 and the surface of the first electrode layer 2 that can contact with each other are substantially same, and preferably same with each other in shape and size. This will result in a maximum contact area when the surface of the first component 1 is brought into contact with the surface of the first electrode layer 2, realizing the purpose of increasing the quantity of the charges carried on the surface of the first component 1 and thereby improving operating performance of the sensor or the output performance of the generator.

In the present disclosure, the surface of the first component 1 and the surface of the first electrode layer 2 that can contact with each other may be flat surfaces, or may be curved surfaces. When the surface of the first component 1 and the surface of the first electrode layer 2 that can contact with each other are all curved surfaces, the mutual contact thereof may also be achieved. In an embodiment of the present disclosure, the surface of the first component 1 and the surface of the first electrode layer 2 that can contact with each other are all flat or curved surface structure to ensure that a moment at which the contact area is maximum occurs when both of the two surfaces contact with each other. In an embodiment of the present disclosure, the surface of the first component 1 and the surface of the first electrode layer 2 that can contact with each other are curved surfaces with complementary shapes, such as curved surfaces with the same curvature and the same area, to ensure that the surface of the first component 1 and the surface of the first electrode layer 2 that can contact with each other may contact completely when contacting with each other.

In the sensor of the present disclosure, according to the shape of the first component 1 used as the object to be detected, the shape of the surface of the first electrode layer 2 that contacts the object to be detected 1 may be flexibly selected to be either a flat surface or a curved surface. When the surface of the object to be detected 1 and the surface of the first electrode layer 2 that can contact with each other are all curved surfaces, the mutual contact thereof may also be achieved. In an embodiment of the present disclosure, the surface of the object to be detected 1 and the surface of the first electrode layer 2 that can contact with each other are all flat or curved surface structure to ensure that a moment at which the contact area is maximum occurs when both of the two surfaces contact with each other. In an embodiment of the present disclosure, the surface of the object to be detected 1 and the surface of the first electrode layer 2 that can contact with each other are curved surfaces with complementary shapes, such as curved surfaces with the same curvature and the same area, to ensure that the surface of the object to be detected 1 and the surface of the first electrode layer 2 that can contact with each other may contact completely when contacting with each other.

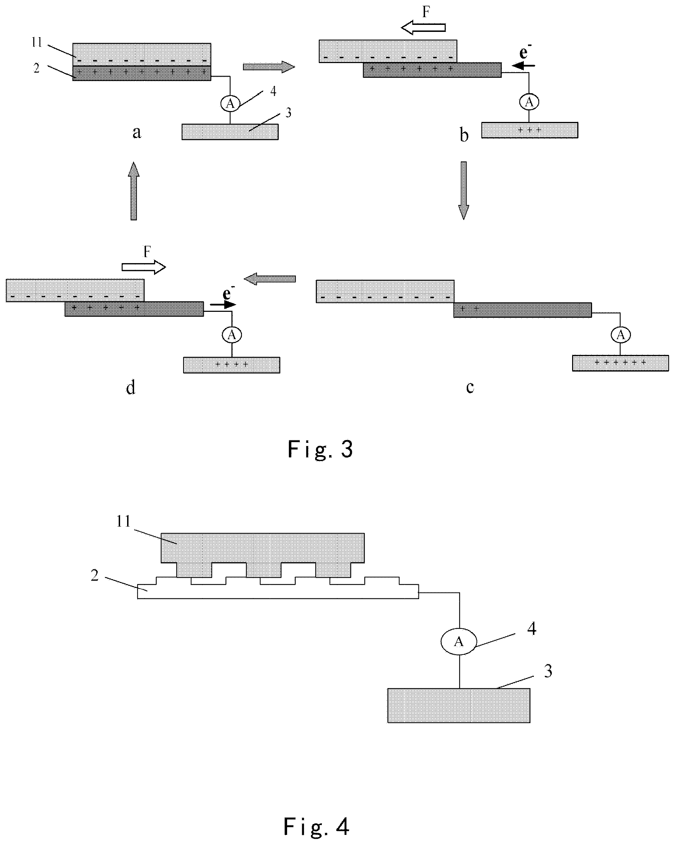

In the sensor of the present disclosure, in addition to the operating mode in which the object to be detected is brought into contact with and then separation from the first electrode layer of the sensing component, the sensing component and the object to be detected may also operate in an operating mode of sliding friction. Referring to Fig. 3 in which the sensing process is shown, a situation in which a lower surface of the object to be detected 11 and an upper surface of the first electrode layer 2 contact with each other is taken as an example of the sensing operating process. For the purpose of convenient description, it is provided that the lower surface of the object to be detected 11 and the upper surface of the first electrode layer 2 are same in shape and size. In practice, the lower surface of the object to be detected 11 and the upper surface of the first electrode layer 2 are not strictly limited to be same in shape and area. That is, they may be same or different in shape and area. In an initial state, the lower surface of the object to be detected 11 may contact with the upper surface of the first electrode layer 2 or not. After they contact with each other under an effect of an external force F (see Fig. 3a), since there is difference in triboelectric series between the material of the upper surface of the first electrode layer 2 and that of the lower surface of the object to be detected 11, there is a difference in electron donating and accepting capability therebetween. A situation in which the lower surface of the object to be detected 11 has a stronger electron accepting capability and the upper surface of the first electrode layer 2 is more susceptible to donate electrons is taken as an example. Surface charge transfer occurs when the lower surface of the object to be detected 11 contacts the upper surface of the first electrode layer 2. As a result, the upper surface of the first electrode layer 2 carries positive charges and the lower surface of the object to be detected 11 carries negative charges (as shown in Fig. 3a). Since the two types of charges have the same electric quantity, there is no electric potential difference between the first electrode layer 2 and the second electrode layer 3 and thus there is no charge to flow. After the lower surface of the object to be detected 11 slides relative to the upper surface of the first electrode layer 2 under effect of the external force F (a force driving the object to be detected to move relative to the sensing component) so as to change (decrease) the contact area, a charge balance between the upper surface of the first electrode layer 2 and the lower surface of the object to be detected 11 is destroyed and a constraint force of the negative charges on the object to be detected 11 acting on the positive charges on the first electrode layer 2 is thus reduced. Therefore, electrons will flow from the second electrode layer 3 to the first electrode layer 2, as shown in Fig. 3b, such that there is a current that flows through the detecting device 4, such as an ammeter, connected between the first electrode layer 2 and the second electrode layer 3. Under the effect of the external force, when the lower surface of the object to be detected 11 is completely separated from the upper surface of the first electrode layer 2, a constraint of the negative charges carried by the lower surface of the object to be detected 11acting on the charges in the first electrode layer 2 is insufficient to cause a charge flow between the first electrode layer 2 and the second electrode layer 3. There is no current that may be detected by the detecting device 4, as shown in Fig. 3c. When an external force F in an opposite direction causes the lower surface of the object to be detected 11 to slide relative to the upper surface of the first electrode layer 2 so as to change (increase) the contact area, the repulsive effect of the negative charges on the lower surface of the object to be detected 11 acting on the electrons on the upper surface of the first electrode layer 2 will result in the flow of the electrons from the first electrode layer 2 to the second electrode layer 3 and there is a current that flows through the detecting device 4 disposed between the first electrode layer 2 and the second electrode layer 3, as shown in Fig. 3d. When the lower surface of the object to be detected 11 completely contacts the upper surface of the first electrode layer 2, the negative charges on the lower surface of the object to be detected 11 and the positive charges on the upper surface of the first electrode layer 2 are balanced and there is no electron that flows between the first electrode layer 2 and the second electrode layer 3, as shown in Fig. 3a. Then, there is no current signal that may be seen on the detecting device 4 disposed between the first electrode layer 2 and the second electrode layer 3. If the process in an order from Figs. 3a to 3d is repeatedly performed, then a pulsed current is generated between the first electrode layer 2 and the second electrode layer 3. If the object to be detected 11 moves relative to the first electrode layer only in a single direction, a current will be detected in the detecting device 4 as long as the contact friction area relative to each other changes.

The surface of the first electrode layer 2 and the surface of the object to be detected 11 that may slidably contact with each other may be flat or curved surfaces. In an embodiment of the present disclosure, the surface of the first electrode layer 2 and the surface of the object to be detected 11 that may slidably contact with each other match in shape. The surface of the first electrode layer 2 and the surface of the object to be detected 11 that may slidably contact with each other are substantially same, preferably same, with each other in shape and size. A moment at which the contact area is largest occurs in the mutual sliding process. For example, the surface of the first electrode layer 2 and the surface of the object to be detected 11 that may slidably contact with each other are arc surfaces with the same curvature.

If the surface of the first electrode layer 2 and the surface of the object to be detected 11 that may slidably contact with each other are smooth and flat surfaces, such a configuration requires a large relative-sliding space for the first electrode layer 2 and the object to be detected 11. Further, in a case that there is a large size difference between the surface of the first electrode layer 2 and the surface of the object to be detected 11 that may slidably contact with each other, a long sliding distance is necessary to meet the requirements for change of the contact area between the first electrode layer 2 and the object to be detected 11 and generation of an electrical signal in the process of mutual sliding friction. Thus, in a case that the lower surface of the object to be detected 11 is an uneven surface, in the sensor of the present disclosure, the surface of the first electrode layer 2 that can contact with the surface of the object to be detected 11 may be an uneven surface. When the first electrode layer 2 and the object to be detected 11 slide relative to each other, the two surfaces incompletely contact. As shown in Fig. 4, the surface of the first electrode layer 2 and the surface of the object to be detected 11 that can contact with each other are both uneven surfaces with a concave-convex structure. When the first electrode layer 2 and the object to be detected 11 slide relative to each other under the effect of the external force, only a short sliding distance is necessary to cause a great change of the contact area. As a result, there is a current that flows through the detecting device 4 connected between the first electrode layer 2 and the second electrode layer 3. The present embodiment may be applicable in a case in which any one of the surface of the object to be detected 11 and the surface of the first electrode layer 2 that can contact with each other is small. The two surfaces contacting with each other are prepared to be uneven surfaces. The requirement for change of the contact area may be met within a small moving range when the surface of the first electrode layer 2 and the surface of the object to be detected 11 that contact with each other are brought into a friction relation to each other under the effect of the external force. The mechanical energy of the external force is converted into electrical energy, achieving the sensing of the movement of the object to be detected.

In an embodiment of the present disclosure, the concavo-convex structures of the surface of the first electrode layer 2 and the surface of the object to be detected 11 that contact with each other are periodically concavo-convex structure. Optionally, the periodically concavo-convex structure may be a periodic structure that includes strip structures arranged in an equidistant and parallel form, a chessboard structure, or the like.

In the sensor according to the present embodiment, it is also possible for the surface of the first electrode layer and the surface of the object to be detected 11 that can contact to be treated by physical or chemical modification. In particular, the physical modification may be achieved by distributing a portion or all of surfaces with microstructure of micron or sub-micronmeter order to increase the contact area between the first electrode layer 2 and the object to be detected 11, thereby increasing the quantity of charge carried on the surface of the object to be detected. The microstructure is preferably nanowires, nanotubes, nanoparticles, nanorods, nanoflowers, nanogrooves, micron grooves, nanotapers, micron tapers, nanospheres, micron spherical structure or an array formed of one or more above structures, and in particular a nano array consisting of nanowires, nanotubes, nanotapers or nanorods, a linear, cubic or rectangular pyramid array that may be prepared with a method of photolithography, plasma etching, and the like. The size of each unit in the array is in the order of nanometer to micron. The specific size and shape of the micro and nano structures should not be a limitation to the scope of the disclosure. This purpose may also be achieved by points or a coating of nanomaterial. The surface of the first electrode layer may also be chemically modified such that the charge transfer quantity at the moment of contact may be further increased , thereby improving the contact charge concentration and output power of the sensor. The chemical modification may be divided into two following types:
One type of method is: for the materials of the first electrode layer 2 and the object to be detected 11 that contact with each other, according to the polarities of the two types of materials, if the polarity of the material of the first electrode layer 2 is positive, to introduce a functional group that is susceptible to denote electrons (i.e., a strong electron-donating group) onto the material surface; or, if the polarity of the material of the first electrode layer 2 is negative, to introduce a functional group that is susceptible to accept electrons (i.e., a strong electron-accepting group) onto the material surface. In the two above situations, the charge transfer quantity may be further increased at the moment of contacting or sliding relative to each other, thereby improving the charge concentration on the surface of the object to be detected and the sensing sensitivity. The strong electron-donating groups may include an amino group, a hydroxy group, an alkoxy group, and the like; and the strong electron-accepting groups may include an acyl group, a carboxyl group, a nitro group, a sulfonic acid group, and the like. The introduction of the functional groups may be carried out with a conventional method, such as plasma surface modification. For example, mixed gas of oxygen and nitrogen may generate plasma at a certain power, thereby introducing an amino group on the material surface.

Another type of method is to introduce positive charges on the material surface the polarity of which is positive and to introduce negative charges on the material surface the polarity of which is negative. In particular, this may be achieved by way of chemical bonding. For example, PDMS surface may be modified with tetraethyl orthosilicate (TEOS) with a sol-gel method so as to carry negative charges. A gold film layer may be modified by gold-sulfur bonding with gold nanoparticles the upper surface of which contains cetyl trimethyl ammonium bromide (CTAB). Since cetyl trimethyl ammonium bromide is cationic, the polarity of the whole material will be positive. According to the electron donating and accepting capability and the type of surface chemical bond of the selected material, those skilled in the art may select an appropriate modifying material to bond thereto in order to achieve the object of the present disclosure, and thus such variations will fall within the scope of the present disclosure.

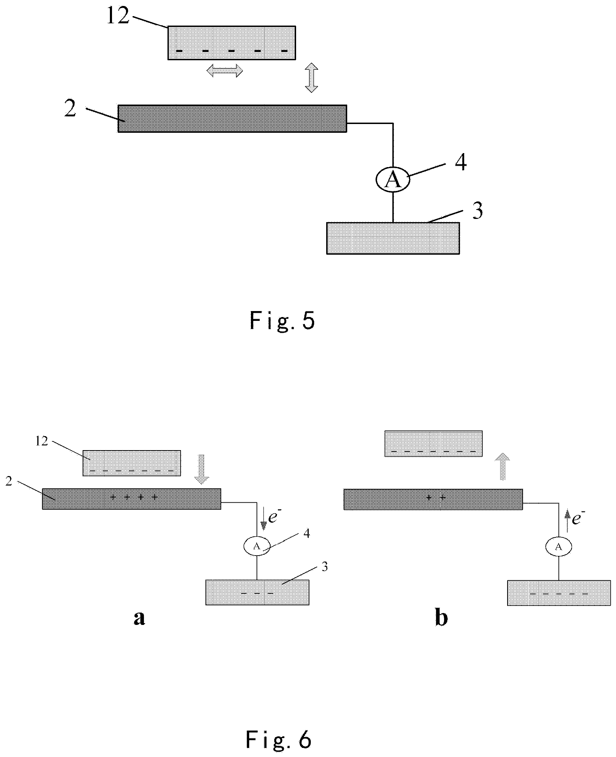

According to the sensor of the present embodiment, in addition to the operating mode in which the object to be detected is brought into contact with and then separation from the sensing component and the operating mode in which the object to be detected and the sensing component slide relative to each other, in the case that the object to be detected carries charges itself, the object to be detected may move relative to the first electrode layer 2 of the sensing component. However, the object to be detected will not contact any electrode layer of the sensing component, as indicated by the arrow in Fig. 6. It is provided that the object to be detected 12, and in particular the surface of the object to be detected 12 facing the first electrode layer 2 carries negative charges in advance. When the object to be detected 12 is approaching the first electrode layer 2, there is a repulsive effect of the negative charges carried by the object to be detected 12 to the negative charges in the first electrode layer 2 due to the electrostatic induction between the object to be detected 12 and the first electrode layer 2. Thus, there is a charge flow between the first electrode layer 2 and the second electrode layer 3. A detecting device 4 connected between the first electrode layer 2 and the second electrode layer 3 may detect a current that flows from the second electrode layer 3 to the first electrode layer 2, as shown in Fig. 6a. When the object to be detected 12 moves away from the first electrode layer, the repulsive effect of the negative charges carried by the object to be detected 12 to the negative charges in the first electrode layer 2 is reduced. There is a charge flow in an opposite direction between the first electrode layer 2 and the second electrode layer 3 of the sensing component. A detecting device 4 connected between the first electrode layer and the second electrode layer may detect a current that flows from the first electrode layer 2 to the second electrode layer 3, as shown in Fig. 6b. In the sensing process shown in Fig. 6, the object to be detected 12 moves in a vertical direction relative to the first electrode layer, but the operating principle therein is also applicable to a situation in which the distance between the surface of the object to be detected 12 and the surface of the first electrode layer 2 that face towards each other does not change (i.e., the object to be detected 12 moves in a direction parallel to the first electrode layer). Further, in the present operating mode, the sensing component may carry charges or may not carry charges. Even if the two electrode layers of the sensing component carry charges themselves, when the object to be detected 12 moves relative to the first electrode layer, the electric potential on the first electrode layer generated by the charges carried on the surface of the object to be detected 12 will change, thereby resulting in a charge flow between the first electrode layer and the second electrode layer.

The charges carried by the object to be detected 12 may be obtained by frictionating the object to be detected 12 with other objects except the sensing component, may be obtained by frictionating the object to be detected 12 with the sensing component prior to operating, and may be obtained by other ways such as being charged. The way by which the charges are obtained has no effect on the sensing process in the present disclosure and will not constitute a limitation to the sensor of the present disclosure.

For the moving mode in which the distance between the surface of the object to be detected 12 and the surface of the first electrode layer 2 that face towards each other changes, the minimum distance between the first electrode layer 2 and the object to be detected 12 is 0.01 times the maximum length of the surface of the first electrode layer 2 that faces towards the object to be detected 12, and the maximum distance is 10 times the maximum length of the surface of the first electrode layer 2 that faces towards the object to be detected 12.

For the moving mode in which the distance between the surface of the object to be detected 12 and the surface of the first electrode layer 2 that face each other does not change, the distance range between the object to be detected 12 and the first electrode layer 2 is 0.1-10 times the maximum length of the surface of the first electrode layer 2 that faces towards the object to be detected 12. In the present embodiment, the surface of the object to be detected 12 and the surface of the first electrode layer 2 that face towards each other are preferably substantially same, and, more preferbably, are same in shape and size, in order to ensure that the charges on the object to be detected may result in the charge flow between the first electrode layer 2 and the second electrode layer 3 under the effect of electrostatic induction, due to the movement of the object to be detected 12.

In the actual electrostatic induction based sensor, the movement of the object to be detected relative to the first electrode layer may be a combination of three types of the above-mentioned relative movements, and is not limited to a single movement mode in which the object to be detected moves relative to the first electrode layer.

### Example Two:

A typical structure of the electrostatic induction generator provided in the present embodiment is also shown in Fig. 3. The generator 11 includes a first component 11 and a second component, wherein the second component is same as that in the first embodiment and comprises the first electrode layer 2 and a second electrode layer 3 associated therewith. The first electrode layer 2 and the second electrode layer 3 are separately disposed and electrically connected. A surface of the first component 11 and the first electrode layer 2 of the second component may be brought into contact and then sliding friction with each other under the effect of external force F. The contact area changes in the sliding friction process. The relative sliding of the first component 11 relative to the first electrode layer 2 causes electric potential on the first electrode layer 2 generated by charges carried by the first component 11 to change. The charges flow between the first electrode layer and the second electrode layer under the electrostatic induction effect to generate a current. Between the first electrode layer 2 and the second electrode layer 3, a detection device 4 may be connected to detect a current generated in the generator, or a load is connected such that power is supplied to the load by the electrical energy generated by the generator.

The operating principle of the generator according to the present embodiment will be described in detail below in connection with the drawings. A situation in which the lower surface of the first component 11 and the upper surface of the first electrode layer 2 are in a contact and friction relation with each other is taken as an example. For the purpose of convenient description, it is provided that the lower surface of the first component 11 and the upper surface of the first electrode layer 2 are same in shape and size. In practice, the lower surface of the first component 11 and the upper surface of the first electrode layer 2 are not strictly limited to be same in shape and area. That is, they may be same or different in shape and area. The operating principle of the generator is shown in Fig. 3. In an initial state, the lower surface of the first component 11 may be brought into contact with the upper surface of the first electrode layer 2 or not. After they contact with each other under an effect of external force F (see Fig. 3a), since there is a difference in triboelectric series between the material of the upper surface of the first electrode layer 2 and that of the lower surface of the first component 11, there is a difference in electron donating and accepting capability therebetween. A situation in which the lower surface of the first component 11 has a stronger electron accepting capability and the upper surface of the first electrode layer 2 is more susceptible to donate electrons is taken as an example. Surface charge transfer occurs when the lower surface of the first component 11 contacts the upper surface of the first electrode layer 2. Then, the upper surface of the first electrode layer 2 carries positive charges and the lower surface of the first component 11 carries negative charges (as shown in Fig. 3a). Since the two types of charges are same in electric quantity, there is no electric potential difference between the first electrode layer 2 and the second electrode layer 3 and thus there is no charge to flow. After the lower surface of the first component 11 slides relative to the upper surface of the first electrode layer 2 under effect of external force F to change (decrease) contact area therebetween, a charge balance between the upper surface of the first electrode layer 2 and the lower surface of the first component 11 is destroyed and constraint force of the negative charges on the first component 11 to the positive charges on the first electrode layer 2 is reduced. Therefore, electrons will flow from the second electrode layer 3 to the first electrode layer 2, as shown in Fig. 3b, such that there is a current that flows through the load or ammeter 4 connected between the first electrode layer 2 and the second electrode layer 3. Under the effect of the external force, when the lower surface of the first component 11 is completely separated from the upper surface of the first electrode layer 2, a constraint of the negative charges carried by the lower surface of the first component 11 to the charges in the first electrode layer 2 is insufficient to cause a charge flow between the first electrode layer 2 and the second electrode layer 3. There is no electron that flow through the load or ammeter 4, as shown in Fig. 3c. When an external force F in an opposite direction causes the lower surface of the first component 11 to slide relative to the upper surface of the first electrode layer 2 so as to change (increase) the contact area , the repulsive effect of the negative charges on the lower surface of the first component 11 to the electrons on the upper surface of the first electrode layer 2 will result in the flow of the electrons from the first electrode layer 2 to the second electrode layer 3 and there is a current that flows through the load or ammeter 4 disposed between the first electrode layer 2 and the second electrode layer 3, as shown in Fig. 3d. When the lower surface of the first component 11 completely contacts the upper surface of the first electrode layer 2, the negative charges on the lower surface of the first component 11 and the positive charges on the upper surface of the first electrode layer 2 are balanced and there is no electron that flows between the first electrode layer 2 and the second electrode layer 3, as shown in Fig. 3a. At this time, there is no current signal that may be seen on the load or ammeter 4 disposed between the first electrode layer 2 and the second electrode layer 3. The process in an order from Figs. 3a to 3d is repeatedly performed and a pulsed current is generated between the first electrode layer 2 and the second electrode layer 3.

In this embodiment, various components of the generator may be same as those in the first embodiment in material and structure, which are omitted here.

The surface of the first component 11 and the surface of the first electrode layer 2 that may slidably contact with each other may be flat or curved surfaces. In an embodiment of the present disclosure, the surface of the first component 11 and the surface of the first electrode layer 2 that may slidably contact with each other match in shape. The surface of the first component 11 and the surface of the first electrode layer 2 that may slidably contact with each other are substantially same, preferably, same, in shape and size. A moment at which the contact area is largest occurs in the mutual sliding process. For example, the surface of the first component 11 and the surface of the first electrode layer 2 that may slidably contact with each other are arc surfaces with the same curvature.

If the surface of the first component 11 and the surface of the first electrode layer 2 that may slidably contact with each other are smooth and flat surfaces, such a configuration requires a large relative-sliding space for the first component 11 and the first electrode layer 2. Further, with respect to a case that there is a large size difference between the surface of the first component 11 and the surface of the first electrode layer 2 that may slidably contact with each other, the requirements in the process of mutual sliding friction between the first component 11 and the first electrode layer 2 for change of the contact area may not be met. Thus, in the generator of the present disclosure, the surface of the first component 11 and the surface of the first electrode layer 2 that can contact with each other may be uneven surfaces. When the first component 11 and the first electrode layer 2 slide relative to each other, the two surfaces incompletely contact. As shown in Fig. 4, the surface of the first component 11 and the surface of the first electrode layer 2 that can contact with each other are both uneven surfaces with a concave-convex structure. When the first component 11 and the first electrode layer 2 slide relative to each other under the effect of the external force, only a short sliding distance is necessary to cause the contact area to change greatly. Then, there is a current that flows through the load 4 connected between the first electrode layer 2 and the second electrode layer 3. The present embodiment is adaptable for a situation in which any surface of the surface of the first component 11 and the surface of the first electrode layer 2 that can contact with each other is small. The two surfaces contacting with each other are prepared to be uneven surfaces. The requirement for change of the contact area may be met within a small moving range when the surface of the first component 11 and the surface of the first electrode layer 2 that frictionate with each other under the effect of the external force. Then, the mechanical energy of the external force may be converted into electrical energy.

In an embodiment of the present disclosure, the concavo-convex structures of the surface of the first component 11 and the surface of the first electrode layer 2 that contact with each other are periodically concavo-convex structure. Alternatively, the periodically concavo-convex structure may be a periodic structure that includes strip structures arranged in an equidistant and parallel form, a chessboard structure, or the like.

In the generator of the present embodiment and the first embodiment, it is also possible for the surface of the first component and the surface of the first electrode layer that can contact with each other to be treated by physical or chemical modification. In particular, the physical modification may be achieved by distributing a portion or all of surfaces with microstructure of micron or sub-micron order to increase the contact area between the first component 11 and the first electrode layer 2, thereby increasing the quantity of charge carried on the surface of the first component. The microstructure is preferably nanowires, nanotubes, nanoparticles, nanorods, nanoflowers, nanogrooves, micron grooves, nanotapers, micron tapers, nanospheres, micron spherical structure or an array formed of one or more above structures, and in particular a nano array consisting of nanowires, nanotubes, nanotapers or nanorods, a linear, cubic or rectangular pyramid array that may be prepared with a method of photolithography, plasma etching, and the like. The size of each unit in the array is in the order of nanometer to micron. The specific size and shape of the micro and nano structures should not be a limitation to the scope of the disclosure. This purpose may also be achieved by points or a coating of nanomaterial. The surface of the first component and/or the surface of the first electrode layer may also be chemically modified such that the charge transfer quantity at the moment of contact may be further increased, thereby improving the contact charge concentration and output power of the generator. The chemical modification may be divided into two following types:
One type of method is: for the materials of the first component 11 and the first electrode layer 2 that contact with each other, to introduce a functional group that is susceptible to denote electrons (i.e., a strong electron-donating group) onto the material surface the polarity of which is positive, or to introduce a functional group that is susceptible to accept electrons (i.e., a strong electron-accepting group) onto the material surface the polarity of which is negative. In the two above situations, the charge transfer quantity may be further increased at the moment of contacting or sliding relative to each other, thereby improving the charge concentration on the surface of the first component and the output power of the generator. The strong electron-donating groups may include an amino group, a hydroxy group, an alkoxy group, and the like; and the strong electron-accepting groups may include an acyl group, a carboxyl group, a nitro group, a sulfonic acid group, and the like. The introduction of the functional groups may be carried out with a conventional method, such as plasma surface modification. For example, mixed gas of oxygen and nitrogen may generate plasma at a certain power, thereby introducing an amino group on the material surface.

Another type of method is to introduce positive charges on the material surface the polarity of which is positive and to introduce negative charges on the material surface the polarity of which is negative. In particular, this may be achieved by way of chemical bonding. For example, PDMS surface may be modified with tetraethyl orthosilicate (TEOS) with a sol-gel method so as to carry negative charges. A gold film layer may be modified by gold-sulfur bonding with gold nanoparticles the upper surface of which contains cetyl trimethyl ammonium bromide (CTAB). Since cetyl trimethyl ammonium bromide is cationic, the polarity of the whole material will be positive. According to the electron donating and accepting capability and the type of surface chemical bond of the selected material, those skilled in the art may select an appropriate modifying material to bond thereto in order to achieve the object of the present disclosure, and thus such variations will fall within the scope of the present disclosure.

In the generator according to the first embodiment and the generator according to the second embodiment, the first component is an object that may move independently from the second component. There is no need to provide an electrode for outputting electrical signal from the generator on the first component. The two electrodes for electrical connection are all disposed in the second component. According to the actual environment when used, the two electrode layers may be provided to be stationary and the distance or relative position therebetween may be easily provided according to the convenience for the external circuit connection, the operating environment, or the like, without consideration for the problem of movement of the electrode layer in the operating process of the generator. The defect that one electrode in the prior art generator should always move together with the moving first component may be prevented.

### Example Three:

A typical structure of the generator provided in the present embodiment is shown in Fig. 5. The generator includes a first component 12 and a second component, wherein the second component comprises the first electrode layer 2 and a second electrode layer 3 associated therewith. The first electrode layer 2 and the second electrode layer 3 are separately disposed and electrically connected. The first component carries charges itself and may move relative to the first electrode layer 2 of the second component, as indicated by the arrow in Fig. 5. The movement of the first component 12 causes electric potential on the first electrode layer 2 generated by charges carried by the first component 12 to change. The charges flow between the first electrode layer 2 and the second electrode layer 3 under the electrostatic induction effect to generate a current. Between the first electrode layer 2 and the second electrode layer 3, a detection device 4 may be connected to detect a current generated in the generator, or a load is connected such that power is supplied to the load by the electrical energy generated by the generator.

The operating process of the generator in the present embodiment is similar to that of the sensor in the first embodiment and reference may also be made to Fig. 6. It is provided that the first component 12 carries negative charges in advance, and in particular the surface of the first component 12 facing towards the first electrode layer 2 carries negative charges. When the first component 12 is approaching the first electrode layer 2, there is a repulsive effect of the negative charges carried by the first component 12 to the negative charges in the first electrode layer 2 due to the electrostatic induction between the first component and the first electrode layer. Thus, there is a charge flow between the first electrode layer 2 and the second electrode layer 3. A detecting device 4 connected between the first electrode layer 2 and the second electrode layer 3 may detect a current that flows from the second electrode layer 3 to the first electrode layer 2, as shown in Fig. 6a. When the first component 12 moves away from the first electrode layer, the repulsive effect of the negative charges carried by the first component 12 to the negative charges in the first electrode layer 2 is reduced. There is a charge flow in an opposite direction between the first electrode layer 2 and the second electrode layer 3 of the second component. A detecting device 4 connected between the first electrode layer and the second electrode layer may detect a current that flows from the first electrode layer 2 to the second electrode layer 3, as shown in Fig. 6b. In the generator shown in Fig. 6, the first component 12 moves in a vertical direction relative to the first electrode layer, but the operating principle thereof is also applicable to a situation in which the distance between the surface of the first component 12 and the surface of the first electrode layer 2 that face each other does not change (i.e., the first component 12 moves in a direction parallel to the first electrode layer).

Further, in the present embodiment, the second component may carry charges or may not carry charges. Even if the two electrode layers of the second component carry charges themselves, when the first component 12 moves relative to the first electrode layer, the electric potential on the first electrode layer generated by the charges carried on the surface of the first component 12 will change, thereby resulting in a charge flow between the first electrode layer and the second electrode layer.

The charges carried by the first component 12 may be obtained by frictionating the first component 12 with other objects except the generator, may be obtained by frictionating the first component 12 with the generator's own second component, and may be obtained by other ways such as being charged. The way by which the charges are obtained has no effect on the electricity generating process in the present disclosure and will not constitute a limitation to the sensor of the present disclosure.

For the moving mode in which the distance between the surface of the first component 12 and the surface of the first electrode layer 2 that face towards each other changes, the minimum distance between the first component 12 and the first electrode layer 2 is 0.01 times the maximum length of the surface of the first component 12 that faces towards the first electrode layer 2, and the maximum distance is 10 times the maximum length of the surface of the first component 12 that faces towards the first electrode layer 2.

For the moving mode in which the distance between the surface of the first component 12 and the surface of the first electrode layer 2 that face towards each other does not change, the distance range between the first component 12 and the first electrode layer 2 is 0.1-10 times the maximum length of the surface of the first component 12 that faces towards the first electrode layer 2. In the present embodiment, the projection of the first component on a plane in which the first electrode layer is located are preferably substantially same, and, more preferably, are same as the first electrode layer in shape and size, in order to ensure that the charges on the first component 12 may result in the charge flow between the first electrode layer 2 and the second electrode layer 3 under the effect of electrostatic induction, due to the movement of the first component 12.

In order to ensure that the generator in this embodiment may stably operate in the present non-contact mode for a long-term without supplementing electrostatic charges generated by friction effect, it is necessary for the first component 12 to move relative to the first electrode layer 2 to have a good retention capacity for electrostatic charges. Thus, the material of the first component 12 may be selected from insulator materials and semiconductor materials, and preferably an electret material capable of "quasi-permanently" maintaining electrostatic charges, such as polytetrafluoroethylene, fluorinated ethylene propylene, quartz, perfluorinated cyclic polymer. Thus, the first component 12 may carry electrostatic charges by friction effect or other ways and maintain them for a long time. The insulator may be selected from some common organic polymeric materials and natural materials, including: polytetrafluoroethylene, polydimethylsiloxane, polyimide, polydiphenyl propane carbonate, polyethylene glycol terephthalate, aniline-formaldehyde resin, polyformaldehyde, ethyl cellulose, polyamide, melamine-formaldehyde, polyethylene glycol succinate, cellulose, cellulose acetate, polyethylene glycol adipate, polydiallyl phthalate, regenerated cellulose sponge, polyurethane elastomer, styrene-propylene copolymer, styrene-acrylonitrile copolymer, styrene-butadiene copolymer, polyamide nylon 11, polyamide nylon 66, wool and fabrics thereof, silk and fabrics thereof, paper, rayon, cotton and fabrics thereof, wood, hard rubber, polymethacrylate, polyvinyl alcohol, polyester, polyisobutylene, polyurethane elastomer, polyurethane flexible sponge, polyethylene glycol terephthalate, polyvinyl butyral, phenolic resin, chloroprene rubber, butadiene-propylene copolymer, natural rubber, polyacrylonitrile, poly(vinylidene chloride-co-acrylonitrile), polyethylene bisphenol A carbonate, polystyrene, polymethyl methacrylate, polycarbonate, liquid crystal macromolecule polymer, polychloroprene, polyacrylonitrile, acetate, polybisphenol carbonate, polychloroether, polytrifluorochloroethylene, polyvinylidene chloride, polyethylene, polypropylene, polyvinyl chloride, and Parylene, including Parylene C, Parylene N, Parylene D, Parylene HT, or Parylene AF4.

Commonly used semiconductors include: silicon, germanium; a Group III and Group V compound, such as gallium arsenide, gallium phosphide; a Group II and Group VI compound, such as cadmium sulfide, zinc sulfide; and a solid solution consisting of a Group III-Group V compound and a Group II-Group VI compound, such as gallium aluminum arsenide, gallium arsenic phosphide. In addition to the above-mentioned crystalline semiconductors, amorphous glass semiconductors, organic semiconductors, and the like are possible. Non-conductive oxides, semiconductor oxides, and complex oxides, such as oxides of manganese, chromium, iron and copper, also including silicon oxide, manganese oxide, chromium oxide, iron oxides, copper oxide, zinc oxide, BiO₂ and Y₂O₃, may also be used as the material of the first component 12 in the present disclosure.

Since there is no need for a metallic electrode to be deposited on back side of the first component 12, the thickness thereof is not specially required and the material thereof may include a body material or may also be a film material, which causes the applicable scope of the generator according to the present disclosure to be greatly extended. For example, the first component 12 of thin layer may be attached to a moving object and the relative movement of the first component 12 relative to the second component is controlled.

The two electrode layers of the second component may be same as those in the first and second embodiments in material and structure and will not be repeatedly described here.

In the actual electrostatic induction based generator, the movement of the first component relative to the first electrode layer may be a combination of three types of the above-mentioned relative movements, and is not limited to a single movement mode in which the first component moves relative to the first electrode layer.

### Example Four:

The sensors or generators in the three above-described embodiments each may further include a friction layer. The first electrode layer of the sensing component (or the second component of the generator) is attached to the lower surface of the friction layer such that the first electrode layer will not directly contact other objects and the second component of the sensor or the generator may be protected. The friction layer of the sensor or the generator may carry charges or not. Since the relative position of the friction layer and the first electrode layer is constant, the friction layer will have no impact on the charge transfer between the first electrode layer and the second electrode layer of the second component when the first component carrying charges moves relative to the first electrode layer.

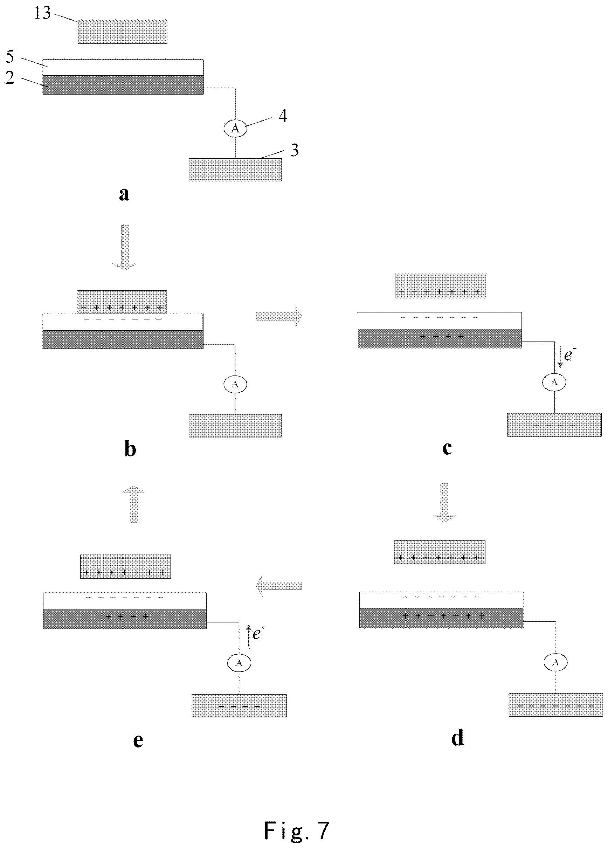

In this embodiment, a typical structure of a sensor or a generator is shown in Fig. 7. The sensor or generator 13 includes: a first component 13; a second component that is formed by electrically connecting the first electrode layer 2 and the second electrode layer 3; and a friction layer 5 disposed on the upper surface of the first electrode layer 2, wherein the upper surface of the friction layer 5 faces towards the first component 13, and wherein the second component (or the sensing component) may be same as that in the previous embodiments. The first component 13 and the upper surface of the friction layer 5 may move relative to each other in a contact-separation manner such that the distance from the first component 13 to the first electrode layer changes. A sliding friction may occur between the first component 13 and the upper surface of the friction layer such that the contact area changes. The first component 13 may carry charges itself and will never contact the friction layer in the process of moving relative to the first electrode layer.

The operating principle of the sensor or generator that includes a friction layer will be described below based on a moving mode in which the first component 13 and the upper surface of the friction layer move in a contact-separation manner. It is provided that the lower surface of the first component 13 and the upper surface of the friction layer 5 are of different materials and there is a difference in triboelectric series between the materials thereof. A structure shown in Fig. 7 is taken as an example to describe the operating principle of the sensor of generator according to the present embodiment below in detail. In an initial state, the first component 13 is not brought into contact with the friction layer 5 (see Fig. 7a). Since there is a difference in triboelectric series between the material of the upper surface of the friction layer 5 and that of the lower surface of the first component 13, there is a difference in electron donating and accepting capability therebetween. A situation in which the upper surface of the friction layer 5 has a stronger electron accepting capability and the lower surface of the first component 13 is more susceptible to donate electrons is taken as an example. Surface charge transfer occurs when the lower surface of the first component 11 (or the object to be detected) contacts the upper surface of the friction layer 5. Then, the upper surface of the friction layer 5 carries negative charges and the lower surface of the first component 11 carries positive charges (as shown in Fig. 7b). Since the two types of charges are same in electric quantity, there is no electric potential difference between the first electrode layer 2 and the second electrode layer 3, as a resulst, there is no charge to flow. When the first component 13 is separated from the upper surface of the friction layer 5 under effect of an external force (as shown in Fig. 7c), the whole consisting of the friction layer 5 and the first electrode layer 2 carries net surplus negative charges and the lower surface of the first component 13 carries positive charges. As the distance from the first component 13 to the friction layer 5 increases, an electrostatic repulsion of the negative charges on the upper surface of the first component 13 to the negative charges in the first electrode layer 2 gradually increases such that electrons in the first electrode layer 2 flow to the second electrode layer 3 through an external circuit. Therefore, there is a current that flows through an ammeter or load 4 connected between the first electrode layer 2 and the second electrode layer 3. When the distance between the first component 13 and the upper surface of the friction layer 5 goes back to the initial position, the largest distance between the first component 13 and the upper surface of the friction layer 5 is reached. The total negative charges carried by the friction layer 5, the first electrode layer 2 and the second electrode layer 3 are balanced with the positive charges carried on the lower surface of the first component 13. There is no current generated between the first electrode layer 2 and the second electrode layer 3 (as shown in Fig. 7d). When the first component 13 approaches the friction layer 5 again, since the distance between the first component 13 and the upper surface of the friction layer 5 becomes small, the repulsive effect of the positive charges on the lower surface of the first component 13 to the positive charges in the first electrode layer 2 is enhanced, thereby generating an instantaneous current in the external circuit in a direction opposite to the first direction (as shown in Fig. 7e). Then the external force continues to contact the first component 13 with the upper surface of the friction layer 5 and the process in Figs. 7b-e is repeated. When the first component 13 and the friction layer 5 is repeatedly brought into contact with and separation from each other, an alternating pulsed current is generated between the first electrode layer 2 and the second electrode layer 3.

It can be known from the operating principle of the sensor or generator shown in Fig. 7 that, although the surface of the friction layer 5 carries negative charges and these negative charges may be maintained all the time after the friction layer 5 is brought into contact and separation from the first component 13, the charges carried by the friction layer 5 will have no effect on the charge flowing between the first electrode layer 2 and the second electrode layer 3 when the first component 13 approaches or moves away from the first electrode layer 2.

The same principle is adaptive to a situation in which the first component may slidably contact the upper surface of the friction layer to change the contact area. The existence of the friction layer will not affect the operation of the sensor or the generator. In this situation, preferably, similarly to the second embodiment, the lower surface of the first component and the upper surface of the friction layer may be substantially same, and preferably same, in shape and size. Both of the surface of the first component and the surface of the friction surface that slide relative to each other may be smooth and flat surfaces. Of course, with respect to a situation in which the lower surface of the first component is prepared to be of a concave-convex structure, the upper surface of the friction layer is accordingly prepared to be a surface with a concave-convex structure.

With respect to the situation in the third embodiment in which the first component is not brought into contact with the electrode layers of the second component, the first component may be not brought into contact with the friction layer, and at the same time not brought into contact with the second component (i.e., the first electrode layer or the second electrode layer). Since the relative position of the friction layer to the first electrode layer is fixed, the existence of the friction layer will not affect the charge transfer between the first electrode layer and the second electrode layer of the second component, as long as the first component carrying charges is controlled to be not brought into contact with the friction layer.

With respect to the situation in which the first component and the friction layer are brought into contact and then separation from each other or they slide relative to each other, an appropriate material may be selected for the friction layer, and in addition to the insulator materials and semiconductor materials mentioned in the first embodiment, the first component may be of a conductive material, such as metal or indium tin oxide ITO. Commonly used metals include gold, silver, platinum, aluminum, nickel, copper, titanium, chromium, or selenium, and alloys formed of the above-described metal. As long as there is a difference in triboelectric series between the materials of the surface of the first component and the surface of the friction layer that can be brought into contact with each other, charges are formed on the surfaces when they are brought into contact with each other and the charges are still maintained on the surfaces of the materials when they are separated from each other. Similarly, the upper surface of the friction layer may also be treated by physical or chemical modification, so that more charges may be generated on the surface of the first component when the friction layer contacts the first component.

With respect to the situation in which the first component carries charges itself and does not contact the friction layer all the time in the process of moving relative to the first electrode layer, since the friction layer 5 does not move relative to the first electrode layer, the flow of charges between the first electrode layer and the second electrode layer of the second component will not be affected no matter whether the surface of the friction layer carries charges. The charges carried by the first component itself may be obtained by frictionating the first component with other objects except the sensor or generator, may be obtained by frictionating the first component with the sensor or generator's own friction layer prior to operating, and may be obtained by other ways such as being charged.

The material of the friction layer may be non-conductive material, and preferably an insulating material that may be selected from the optional material of the first component in the first embodiment. The existence of the friction layer may have a good protective effect for the first electrode layer 2, and thus the size and shape of the surface thereof is preferably at least completely cover the first electrode layer 2. In an embodiment of the present disclosure, the friction layer may further cover the second electrode layer 3. However, since the friction layer will increase the vertical separation distance between the first component 13 and the second component, the thickness thereof should not be too large. The friction layer is preferably sheet-like or film-like, and the thickness thereof is generally chosen between 10nm and 5cm, preferably between 100nm and 5mm, and more preferably between 1 µm and 500 µm.

Since the first electrode layer 2 is an electrode layer of the sensor or generator, the first electrode layer is preferably prepared on the lower surface of the friction layer by using a conventional technology, such as magnetron sputtering, vapor deposition and printing. Of course, a thicker first electrode layer 2 may be employed, such as Cu or Al foil, the surface of which is prepared with material of the friction layer 5, achieving a contact arrangement of the first electrode layer 2 with the friction layer 5.

The friction layer may be a separate structure, for example consisting of two separate portions, one of which covers the surface of the first electrode layer 2 and the other of which covers the surface of the second electrode layer 3. The specific structure and shape of the friction layer may be arranged depending on the requirements of the first electrode layer of the sensor or generator, as long as the first electrode layer is protected from being worn without affecting the operation of the sensor or generator.

In all embodiments of the present disclosure, the first component, the second component and the friction layer each may be of rigid or flexible material. Since the hardness of the material will not affect the sliding friction or contact friction effect therebetween, if a flat plane needs to be maintained by the surface of the first electrode layer or the first component, it may also be achieved through a support from the other components.

### Example Five:

The sensor or generator provided by the present disclosure further includes an isolating layer. The isolating layer is used to isolate the first electrode layer and the second electrode layer of the second component such that the first electrode layer and the second electrode layer are separated and are maintained in set relative positions and such that the second component may be insulated and isolated from other devices.

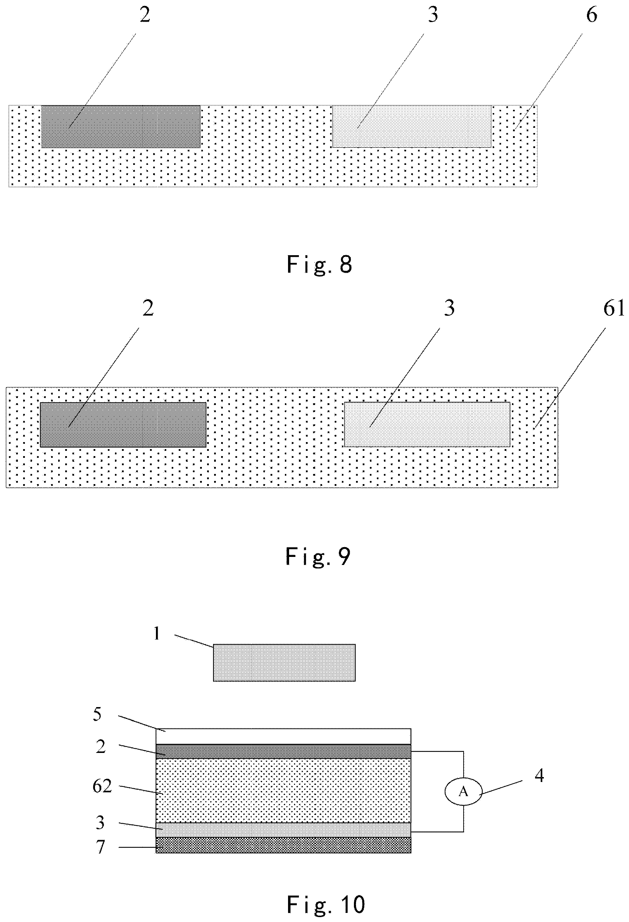

Referring to Fig. 8, the first electrode layer 2 and the second electrode layer 3 of the second component each are embedded in the isolating layer 6 such that the first electrode layer 2 and the second electrode layer 3 are isolated from each other and are maintained at a fixed relative position and such that at least the upper surface of the first electrode layer 2 may be exposed out of the isolating layer 6. The upper surface of the second electrode layer 3 may be exposed out of the isolating layer 6 or not. The first electrode layer 2 is electrically connected to the second electrode layer 3 by a conductive wire or conductive film.

In other embodiments, the first electrode layer 2 and/or the second electrode layer 3 may be entirely wrapped by the isolating layer. Referring to Fig. 9, all the surface of the first electrode layer 2 and the second electrode layer 3 are covered by the isolating layer 61. In the sensor or generator with such a structure, the isolating layer 61 covering the upper surface of the first electrode layer 2 further serves as the friction layer in the fourth embodiment. The first electrode layer 2 is electrically connected to the second electrode layer 3 by a conductive wire or conductive film.

In other embodiments outside the scope of the invention, the isolating layer and the two electrode layers of the second component are arranged in a stacked manner. Referring to Fig. 10, the first electrode layer 2 and the second electrode layer 3 of the second component are disposed on upper and lower surfaces of the isolating layer 62, respectively, forming a multilayer structure. The first electrode layer 2 may be electrically connected to the second electrode layer 3 by a conductive wire or conductive film. In the present embodiment, preferably, the first electrode layer 2, the second electrode layer 3 and the isolating layer 62 each are of thin-layer structure, which may facilitate reduction of the overall structure of the sensor or generator and may miniaturize the device. The multilayer structure may include a friction layer 5 provided on the upper surface of the first electrode layer 2. The friction layer 5 may be brought into contact with and then separation from the first component 1 or into slidably friction with the first component 1 while protecting the first electrode layer, so that the surface of the first component 1 is charged. In addition, the multilayer structure may further include a protective layer 7 provided on the lower surface of the second electrode layer to protect the second electrode layer. This type of multilayer structure may be produced by a conventional preparation process for a semiconductor device.

In the multilayer structure of Fig. 10, the first electrode layer 2 and the second electrode layer 3 each may be conductive film. Optional range for thickness of the film may be 10 nm-5 mm, preferably 100nm-500µm. The first electrode layer 2 and the second electrode layer 3 is preferably a metal film layer, may be prepared on the upper and lower surfaces of the isolating layer 62 by using an existing technology, such as magnetron sputtering, vapor deposition and printing. For the first electrode layer 2 and the second electrode layer 3 with a relatively large thickness, they may be disposed on the upper and lower surfaces of the isolating layer 62 in a manner such as sticking.

Material of the isolating layer and material of the protective layer is preferably of insulating material or semiconductor material. Since the isolating layer and the protective layer in the present disclosure is not involved in operating process of the sensor or generator, the material may be chosen in a wide range. All existing insulating material and semiconductor material may be chosen, such as organic insulator material PDMS, rubber or glass plate. The specific material may also be chosen from the insulating materials and the semiconductors enumerated in the first embodiment that may be employed by the first component.

The isolating layer and the protective layer may be of rigid material or may be of flexible structure. For a sensor or generator in which the first electrode layer 2, the second electrode layer 3, the isolating layer 6, the friction layer 5 and the protective layer 7 each are of flexible structure, the sensor or generator is called as flexible device that may be used in connection with other flexible devices. The sensor or generator made of flexible material is advantageous in that the friction surface that is soft, light and thin will be deformed when being subject to a slight external force. Such deformation will result in a relative displacement of the two friction material layers (first component 1 and the first electrode layer 2 or the friction layer 5), thereby outputting an electric signal out by the sliding friction. Use of flexible materials makes it possible for the sensor or generator according to the present disclosure may be widely used in biological and medical fields. In the process of use, macromolecule material that is ultra-thin, soft, flexible and/or transparent may be used as substrate and encapsulated to facilitate the use and to improve the strength. It is apparent that all the structures disclosed in the present disclosure each may be made of an appropriate super-soft elastic material, thereby forming a flexible sensor or generator.

In the present disclosure, the first electrode layer 2 and the second electrode layer 3 are necessary to be electrically connected in order to generate a current between the first electrode layer 2 and the second electrode layer 3. The first electrode layer 2 may be electrically connected to the second electrode layer 3 directly by a load. The load may be a simple resistor (such as a lighting device) or a complex circuit (e.g. series-parallel circuit consisting of a plurality of electronic elements), and is not particularly limited here, as long as the first electrode layer 2 and the second electrode layer 3 may be electrically connected.

### Example Six:

Accordingly, the present disclosure further provides a sensing method that is applicable in any of the above-described sensors and provides a method of generating electricity that is applicable in any of the above-described generator, including steps of:
moving the first component 1 relative to the first electrode layer 2 such that electric potential on the first electrode layer generated by charges carried by the first component 1 changes; and
causing the charges to flow between the first electrode layer 1 and the second electrode layer so as to generate a current.

The step of moving the first component 1 relative to the first electrode layer 2 may include: bringing the first component 1 into contact with a surface of the first electrode layer 2 and then separating it from the surface of the first electrode layer 2 such that the first component 1 is charged. In the process of the first component 1 and the first electrode layer 2 approaching or moving away from each other, electric potential on the first electrode layer generated by charges carried by the first component 1 changes, the electrostatic induction between the first component 1 and the first electrode layer 2 causes a current to flow through a load and the like, that is connected between the first electrode layer 2 and the second electrode layer 3.

The step of moving the first component 1 relative to the first electrode layer 2 may include: bringing a surface of the first component 1 into sliding friction with a surface of the first electrode layer 2 to change contact area therebetween in the process of sliding friction, such that the surface of the first component 1 carries charges. In the process of the first component 1 and the first electrode layer 2 sliding relative to each other, electric potential on the first electrode layer 2 generated by charges carried by the first component 1 changes, the electrostatic induction between the first component 1 and the first electrode layer 2 causes a current to flow through a load and the like, that is connected between the first electrode layer 2 and the second electrode layer 3.

The step of moving the first component 1 relative to the first electrode layer 2 may include: moving the first component 1 relative to the first electrode layer 2 without contacting the first electrode layer 2 at any time in a case that the first component 1 carries charges itself. In the process of moving the first component 1 relative to the first electrode layer 2, electric potential on the first electrode layer 2 generated by charges carried by the first component 1 changes, the electrostatic induction between the first component 1 and the first electrode layer 2 causes a current to flow through a load and the like, that is connected between the first electrode layer 2 and the second electrode layer 3. The charges carried by the first component may be obtained after the first component and the first electrode layer 2 are brought into contact and then separation from each other and may also be obtained in other ways.

The material and structure of the first component as well as the first electrode layer and the second electrode layer of the second component may adopt those of respective components in the above-mentioned sensor or generator in the present disclosure and will not be repeatedly described here.

### Example Seven:

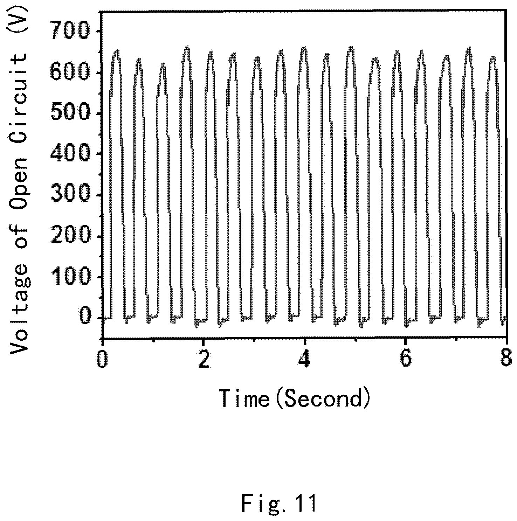

A thin plate of polymethyl methacrylate with a length of 10 cm × a width of 10 cm × a thickness of 1mm is obtained to serve as a substrate by cutting. A copper film is deposited on one side of the polyimide thin plate to serve as the first electrode layer and another copper film is deposited on the other side thereof to serve as the second electrode layer. The copper films are connected with a copper wire and a voltmeter is introduced. A layer of polytetrafluoroethylene film with a length of 10 cm × a width of 10 cm × a thickness of 75 µm is adhered to the surface of the first electrode layer to serve as the friction layer. A layer of nylon film with a length of 10 cm × a width of 10 cm × a thickness of 50 µm is adhered to the surface of the second electrode layer to serve as a protective layer. The polytetrafluoroethylene film is placed on the ground upwards and a sole is brought into contact with and then separation from it periodically. There is an output of electrical signal that correspondingly varies from the voltmeter connected between the two copper films. Referring to Fig. 11, a maximum value of the voltage signal between the two copper films measured by a voltmeter is about 650V, showing that the sensor is capable of sensing a moving object. The movement of an object may be sensed by converting the mechanical energy from the external force into electrical energy without supplying an additional power supply to the sensor. When used as a generator, it is possible to convert the mechanical energy from the external force into electrical energy to generate electricity.

### Example Eight:

Based on the structure of electrostatic induction based generator in the fifth embodiment, the present embodiment provides a process for preparing a specific generator. An organic glass sheet with a length of 10 cm × a width of 2 cm × a thickness of 1.59 mm is obtained to serve as the isolating layer of the generator with a laser by cutting. With a method of magnetron sputtering, an aluminum film with a thickness of 1µm is deposited on the upper surface of the isolating layer to serve as the first electrode layer and an aluminum foil with a length of 10 cm × a width of 2 cm × a thickness of 25 µm is deposited on the lower surface to serve as the second electrode layer. The first electrode layer and the second electrode layer are electrically connected with a LED lamp. A nanowire coating of polytetrafluoroethylene is prepared on the upper surface of the polytetrafluoroethylene film with a length of 10 cm × a width of 2 cm × a thickness of 50 µm to serve as the friction layer. The lower surface of the polytetrafluoroethylene film is adhered to the upper surface of the first electrode layer by conductive glue. A aluminum sheet with a length of 10 cm × a width of 2 cm × a thickness of 2 mm serves as the first component. The surface of the aluminum sheet and the surface of the polytetrafluoroethylene film is provided in a stacked manner each other. The aluminum sheet slides relative to the polytetrafluoroethylene film under the effect of external force and the contact area changes. The LED lamp connected between the first electrode layer and the second electrode layer may be lighted. It is shown that the generator can convert the mechanical energy from the external force into electrical energy to generate electricity.

The above are only preferred embodiments of the present disclosure, and will not be a limitation to the disclosure in any form. Many possible variations and modification to the technical solution in the present disclosure may be made by those skilled in the art based on the method and technical contents disclosed above, and the technical solution in the present disclosure may be modified to equivalent embodiments with equivalent changes.

## Claims

1. A sensing or generating method based on electrostatic induction caused by movement of a charged object (1; 11, 12 13), the method comprises using an induction based sensor or generator comprising
- a first electrode layer (2) and a second electrode layer (3) cooperating therewith, the first electrode layer (2) and the second electrode layer (3) are separately disposed and electrically connected to each other by conductive wire or conductive film;
- wherein the sensor or generator is configured such that an electric potential of the first electrode layer (2) is generated by charges carried by the object (1; 11-13); and the potential is changed so that charges flow between the first electrode layer (2) and the second electrode layer (3) under the electrostatic induction effect and generate a current in said conductive wire or conductive film, when the object (1; 11-13) moves relative to the first electrode layer (2);
- the sensor or generator further comprising
∘ a detection device (4) connected to detect the current generated, or
∘ a load connected such that the current generated is supplied to the load;
- the sensor or generator further comprises an isolating layer (6; 61), wherein the isolating layer (6; 61) is arranged to isolate the first electrode layer (2) and the second electrode layer (3) such that the first electrode layer (2) and the second electrode layer (3) are separated and are maintained in set relative positions;
- the first electrode layer (2) and the second electrode layer (3) are both embedded in the isolating layer (6; 61), wherein
∘ the upper surface of the first electrode layer (2) and the upper surface of the second electrode layer (3) are exposed out of the upper side of the isolating layer (6); or
∘ the first electrode layer (2) and the second electrode layer (3) are entirely wrapped by the isolating layer (61) and disposed proximate to the upper side of the isolating layer (61);
the method comprising the steps of:
- moving the object (1; 11-13) relative to the first electrode layer (2), so that a change of the electric potential of the first electrode layer (2) is generated by charges carried by the object (1; 11-13); and
- causing charges to flow between the first electrode layer(2) and the second electrode layer (3) so as to generate the current in said conductive wire or conductive film; and
∘ detecting the current in the detecting device (4); or
∘ supplying said current to said load.

2. The sensing or generating method according to claim 1,
wherein the step of moving the object (1) to be detected relative to the first electrode layer (2) comprises: bringing the surface of the object (1) to be detected into contact with and then separating it from the surface of the first electrode layer (2), so as to charge the object (1) to be detected; or
the step of moving the object (1) to be detected relative to the first electrode layer (2) comprises: bringing the surface of the object (1) to be detected into sliding friction with the surface of the first electrode layers (2) to change contact area therebetween in sliding process, so as to charge the surface of the object (1) to be detected; or
the step of moving the object (1) to be detected relative to the first electrode layer (2) comprises: moving the object (1) to be detected relative to the first electrode layer (2) without contacting the first electrode layer (2) at any time in a case that the object (1) to be detected carries charges itself.

3. The sensing or generating method according to claim 1,
wherein the object (1) is charged by changing a contact area between the object (1) and the first electrode layer (2), which results from contact-separation or sliding friction between the object (1) and the first electrode layer (2).

4. The sensing or generating method according to claim 3,
wherein the surface of the first electrode layer (2) and the surface of the object (1) that slide relative to each other are smooth and flat surfaces or uneven surfaces of concavo-convex structure, preferably, the concavo-convex structure of the surface of the first electrode layer is a periodically concavo-convex structure.

5. The sensing or generating method according to claim 3 or 4,
wherein a portion or whole of the surface of the first electrode layer (2) that is allowed to be brought into contact with the object (1) is distributed with microstructure of micro or sub-micro meter order; or
the surface of the first electrode layer (2) that is allowed to be brought into contact with the object (1) is treated by chemical modification.

6. The sensing or generating method according to claim 1,
wherein the object (11, 12, 13) is movable relative to the first electrode layer (2) by bringing the object (11-13) into contact with and then separating it from the first electrode layer (2), such that the surface of the object (11-13) is charged; or
the object (11-13) is movable relative to the first electrode layer (2) by bringing the object (11-13) into sliding friction with the first electrode layer (2) to change contact area between their surfaces in sliding friction process, such that the surface of the object (11-13) is charged; or
the object (11-13) is charged in advance prior to contacting the first electrode layer (2).

7. The sensing or generating method according to claim 6,
wherein the surface of the object (11-13) and the surface of the first electrode layer (2) that slide relative to each other are smooth and flat surfaces or uneven surfaces of concavo-convex structure.

## Patentansprüche

1. Mess- oder Erzeugungsverfahren auf der Grundlage elektrostatischer Induktion, die durch Bewegung eines geladenen Objekts (1; 11, 12 13) verursacht wird, wobei das Verfahren die Verwendung eines Sensors oder Generators auf Induktionsbasis aufweist, aufweisend
- eine erste Elektrodenschicht (2) und eine damit zusammenwirkende zweite Elektrodenschicht (3), wobei die erste Elektrodenschicht (2) und die zweite Elektrodenschicht (3) getrennt angeordnet und durch einen leitenden Draht oder einen leitenden Film elektrisch miteinander verbunden sind;
- wobei der Sensor oder Generator so konfiguriert ist, dass ein elektrisches Potential der ersten Elektrodenschicht (2) durch Ladungen erzeugt wird, die von dem Objekt (1; 11-13) getragen werden; und das Potential so geändert wird, dass Ladungen zwischen der ersten Elektrodenschicht (2) und der zweiten Elektrodenschicht (3) unter dem elektrostatischen Induktionseffekt fließen und einen Strom in dem leitenden Draht oder leitenden Film erzeugen, wenn sich das Objekt (1; 11-13) relativ zur ersten Elektrodenschicht (2) bewegt;
- der Sensor oder Generator weiterhin aufweist
∘ eine Detektionsvorrichtung (4), die angeschlossen ist, um den erzeugten Strom zu detektieren, oder
∘ eine Last, die so angeschlossen ist, dass der erzeugte Strom der Last zugeführt wird;
- der Sensor oder Generator weiterhin eine Isolierschicht (6; 61) umfasst, wobei die Isolierschicht (6; 61) angeordnet ist, um die erste Elektrodenschicht (2) und die zweite Elektrodenschicht (3) zu isolieren, so dass die erste Elektrodenschicht (2) und die zweite Elektrodenschicht (3) getrennt sind und in festgelegten relativen Positionen gehalten sind;
- die erste Elektrodenschicht (2) und die zweite Elektrodenschicht (3) beide in der Isolierschicht (6; 61) eingebettet sind, wobei
∘ die obere Fläche der ersten Elektrodenschicht (2) und die obere Fläche der zweiten Elektrodenschicht (3) aus der Oberseite der Isolierschicht (6) herausragen; oder
∘ die erste Elektrodenschicht (2) und die zweite Elektrodenschicht (3) vollständig von der Isolierschicht (61) umhüllt sind und in der Nähe der Oberseite der Isolierschicht (61) angeordnet sind;
wobei das Verfahren die folgenden Schritte aufweist:
- Bewegen des Objekts (1; 11-13) relativ zur ersten Elektrodenschicht (2), so dass eine Änderung des elektrischen Potentials der ersten Elektrodenschicht (2) durch von dem Objekt (1; 11-13) getragenen Ladungen erzeugt wird; und
- Bewirken, dass Ladungen zwischen der ersten Elektrodenschicht (2) und der zweiten Elektrodenschicht (3) fließen, um den Strom in dem leitenden Draht oder dem leitenden Film zu erzeugen; und
∘ Detektieren des Stroms in der Detektionsvorrichtung (4); oder
∘ Lieferung des Stroms an die Last.

2. Mess- oder Erzeugungsverfahren nach Anspruch 1,
wobei der Schritt des Bewegens des zu detektierenden Objekts (1) relativ zur ersten Elektrodenschicht (2) aufweist: In-Kontakt-Bringen der Oberfläche des zu detektierenden Objekts (1) mit der Oberfläche der ersten Elektrodenschicht (2) und anschließendes Trennen von dieser, um das zu detektierende Objekt (1) aufzuladen; oder
der Schritt des Bewegens des zu detektierenden Objekts (1) relativ zur ersten Elektrodenschicht (2) aufweist: Bringen der Oberfläche des zu detektierenden Objekts (1) in Gleitreibung mit der Oberfläche der ersten Elektrodenschichten (2), um einen Kontaktbereich dazwischen im Gleitprozess zu ändern, um die Oberfläche des zu detektierenden Objekts (1) aufzuladen; oder
der Schritt des Bewegens des zu detektierenden Objekts (1) relativ zur ersten Elektrodenschicht (2) aufweist: Bewegen des zu detektierenden Objekts (1) relativ zur ersten Elektrodenschicht (2), ohne die erste Elektrodenschicht (2) zu irgendeinem Zeitpunkt zu berühren, in einem Fall, dass das zu detektierende Objekt (1) selbst Ladungen trägt.

3. Mess- oder Erzeugungsverfahren nach Anspruch 1,
wobei das Aufladen des Objekts (1) durch Veränderung einer Kontaktfläche zwischen dem Objekt (1) und der ersten Elektrodenschicht (2) erfolgt, die durch Kontakttrennung oder Gleitreibung zwischen dem Objekt (1) und der ersten Elektrodenschicht (2) entsteht.

4. Mess- oder Erzeugungsverfahren nach Anspruch 3,
wobei die Oberfläche der ersten Elektrodenschicht (2) und die Oberfläche des Objekts (1), die relativ zueinander gleiten, glatte und ebene Oberflächen oder unebene Oberflächen mit konkav-konvexer Struktur sind, vorzugsweise ist die konkav-konvexe Struktur der Oberfläche der ersten Elektrodenschicht eine periodisch konkav-konvexe Struktur.

5. Mess- oder Erzeugungsverfahren nach Anspruch 3 oder 4,
wobei auf einem Abschnitt oder der gesamten Oberfläche der ersten Elektrodenschicht (2), die mit dem Objekt (1) in Kontakt gebracht werden kann, eine Mikrostruktur aus Mikro- oder Submikrometerordnung verteilt ist; oder
die Oberfläche der ersten Elektrodenschicht (2), die in Kontakt mit dem Objekt (1) gebracht werden kann, mittels chemischer Modifikation behandelt wird.

6. Mess- oder Erzeugungsverfahren nach Anspruch 1,
wobei das Objekt (11, 12, 13) relativ zu der ersten Elektrodenschicht (2) bewegbar ist, indem das Objekt (11-13) in Kontakt mit der ersten Elektrodenschicht (2) gebracht und anschließend von dieser getrennt wird, so dass die Oberfläche des Objekts (11-13) aufgeladen wird; oder
das Objekt (11-13) relativ zur ersten Elektrodenschicht (2) bewegbar ist, indem das Objekt (11-13) in Gleitreibung mit der ersten Elektrodenschicht (2) gebracht wird, um die Kontaktfläche zwischen ihren Oberflächen im Gleitreibungsprozess zu ändern, so dass die Oberfläche des Objekts (11-13) aufgeladen wird; oder
das Objekt (11-13) vor dem Kontakt mit der ersten Elektrodenschicht (2) vorab aufgeladen wird.

7. Mess- oder Erzeugungsverfahren nach Anspruch 6,
wobei die Oberfläche des Objekts (11-13) und die Oberfläche der ersten Elektrodenschicht (2), die relativ zueinander gleiten, glatte und ebene Oberflächen oder unebene Oberflächen mit konkav-konvexer Struktur sind.

## Revendications

1. Procédé de détection ou de génération basé sur l'induction électrostatique provoquée par le mouvement d'un objet chargé (1 ; 11, 12, 13), le procédé comprend l'utilisation d'un capteur ou générateur basé sur l'induction comprenant :
- une première couche d'électrode (2) et une seconde couche d'électrode (3) coopérant avec celle-ci, la première couche d'électrode (2) et la seconde couche d'électrode (3) sont disposées séparément et connectées électriquement l'une à l'autre par un fil conducteur ou un film conducteur ;
- le capteur ou générateur étant configuré de telle sorte qu'un potentiel électrique de la première couche d'électrode (2) est généré par des charges portées par l'objet (1 ; 11-13) ; et le potentiel étant modifié de telle sorte que des charges circulent entre la première couche d'électrode (2) et la seconde couche d'électrode (3) sous l'effet d'induction électrostatique et génèrent un courant dans ledit fil conducteur ou film conducteur, lorsque l'objet (1 ; 11-13) se déplace par rapport à la première couche d'électrode (2) ;
- le capteur ou le générateur comprenant en outre :
∘ un dispositif de détection (4) connecté pour détecter le courant généré, ou
° une charge connectée de telle sorte que le courant généré est fourni à la charge ;
- le capteur ou générateur comprenant en outre une couche d'isolation (6 ; 61), la couche d'isolation (6 ; 61) étant agencée pour isoler la première couche d'électrode (2) et la seconde couche d'électrode (3) de telle sorte que la première couche d'électrode (2) et la seconde couche d'électrode (3) sont séparées et sont maintenues dans des positions relatives définies ;
- la première couche d'électrode (2) et la seconde couche d'électrode (3) étant toutes deux noyées dans la couche isolante (6 ; 61),
° la surface supérieure de la première couche d'électrode (2) et la surface supérieure de la seconde couche d'électrode (3) étant exposées à l'extérieur du côté supérieur de la couche isolante (6) ; ou
° la première couche d'électrode (2) et la seconde couche d'électrode (3) étant entièrement enveloppées par la couche isolante (61) et disposées à proximité du côté supérieur de la couche isolante (61) ;
le procédé comprenant les étapes suivantes :
- déplacement de l'objet (1 ; 11-13) par rapport à la première couche d'électrode (2), de sorte qu'un changement du potentiel électrique de la première couche d'électrode (2) est généré par des charges portées par l'objet (1 ; 11-13) ; et
- le fait d'amener des charges à circuler entre la première couche d'électrode (2) et la seconde couche d'électrode (3) de façon à générer le courant dans ledit fil conducteur ou film conducteur ; et
° détection du courant dans le dispositif de détection (4) ; ou
° fourniture dudit courant à ladite charge.

2. Procédé de détection ou de génération selon la revendication 1,
l'étape de déplacement de l'objet (1) à détecter par rapport à la première couche d'électrode (2) comprenant : la mise en contact puis la séparation de la surface de l'objet (1) à détecter avec/de la surface de la première couche d'électrode (2), de façon à charger l'objet (1) à détecter ; ou
l'étape de déplacement de l'objet (1) à détecter par rapport à la première couche d'électrode (2) comprenant : le fait d'amener la surface de l'objet (1) à détecter en friction de glissement avec la surface de la première couche d'électrode (2) pour changer la zone de contact entre elles dans le processus de glissement, de façon à charger la surface de l'objet (1) à détecter ; ou
l'étape de déplacement de l'objet (1) à détecter par rapport à la première couche d'électrode (2) comprenant : le déplacement de l'objet (1) à détecter par rapport à la première couche d'électrode (2) sans entrer en contact avec la première couche d'électrode (2) à aucun moment dans un cas où l'objet (1) à détecter porte lui-même des charges.

3. Procédé de détection ou de génération selon la revendication 1,
l'objet (1) étant chargé en modifiant une zone de contact entre l'objet (1) et la première couche d'électrode (2), résultant d'une séparation par contact ou d'une friction de glissement entre l'objet (1) et la première couche d'électrode (2).

4. Procédé de détection ou de génération selon la revendication 3,
la surface de la première couche d'électrode (2) et la surface de l'objet (1) qui glissent l'une par rapport à l'autre étant des surfaces lisses et plates ou des surfaces inégales de structure concavo-convexe, de préférence, la structure concavo-convexe de la surface de la première couche d'électrode étant une structure concavo-convexe périodique.

5. Procédé de détection ou de génération selon la revendication 3 ou 4,
une partie ou la totalité de la surface de la première couche d'électrode (2) qui est autorisée à être mise en contact avec l'objet (1) étant distribuée avec une microstructure d'ordre micro ou submicrométrique ; ou
la surface de la première couche d'électrode (2) qui peut être mise en contact avec l'objet (1) étant traitée par modification chimique.

6. Procédé de détection ou de génération selon la revendication 1,
l'objet (11, 12, 13) étant mobile par rapport à la première couche d'électrode (2) en amenant l'objet (11-13) en contact avec la première couche d'électrode (2) puis en le séparant de celle-ci, de telle sorte que la surface de l'objet (11-13) est chargée ; ou
l'objet (11-13) étant mobile par rapport à la première couche d'électrode (2) en amenant l'objet (11-13) en friction de glissement avec la première couche d'électrode (2) pour changer la zone de contact entre leurs surfaces dans le processus de friction de glissement, de telle sorte que la surface de l'objet (11-13) est chargée ;
ou
l'objet (11-13) étant chargé à l'avance avant d'entrer en contact avec la première couche d'électrode (2) .

7. Procédé de détection ou de génération selon la revendication 6,
la surface de l'objet (11-13) et la surface de la première couche d'électrode (2) qui glissent l'une par rapport à l'autre étant des surfaces lisses et plates ou des surfaces inégales de structure concavo-convexe.
